(19) Europäisches Patentamt / European Patent Office / Office européen des brevets

(11) **EP 4 757 217 A1**

(12) **EUROPEAN PATENT APPLICATION**
published in accordance with Art. 153(4) EPC

(43) Date of publication:
**10.06.2026 Bulletin 2026/24**

(21) Application number: **24858114.2**

(22) Date of filing: **17.07.2024**

(51) International Patent Classification (IPC):
**H04L 1/00** (2006.01)

(52) Cooperative Patent Classification (CPC):
**H04B 7/08; H04L 1/00; H04L 5/00**

(86) International application number:
**PCT/CN2024/105883**

(87) International publication number:
**WO 2025/044570 (06.03.2025 Gazette 2025/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.08.2023 CN 202311136266**

(71) Applicant: **HUAWEI TECHNOLOGIES CO., LTD.**
**Shenzhen 518129 (CN)**

(72) Inventors:
• **GAO, Xiang**
**Shenzhen, Guangdong 518129 (CN)**
• **CAI, Shijie**
**Shenzhen, Guangdong 518129 (CN)**
• **LIU, Kunpeng**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57) This application provides a communication method and apparatus. The method includes: receiving first indication information indicating a quantity R of data streams and an index of a first-type data stream, where the first-type data stream is a same part of data streams included in a first data stream subset and a second data stream subset; determining the first-type data stream based on the first indication information; and processing the first-type data stream. In the technical solution of this application, a transmit end can flexibly adjust the first-type data stream as required, and can accurately indicate the index of the first-type data stream to a receive end. In this way, the transmit end can flexibly perform precoding processing and control the first-type data stream, so that the receive end correctly merges the first-type data stream, ensuring data stream detection performance.

400

```
┌──────────────┐                    ┌──────────────┐
│    Second    │                    │    First     │
│communication │                    │communication │
│  apparatus   │                    │  apparatus   │
└──────┬───────┘                    └──────┬───────┘
       │                                   │
┌──────┴────────────┐                      │
│ S410: Determine   │                      │
│ first indication  │                      │
│    information    │                      │
└──────┬────────────┘                      │
       │  S420: First indication information│
       │ ─────────────────────────────────▶│
       │                          ┌─────────┴─────────┐
       │                          │ S430: Determine a │
       │                          │ first-type data   │
       │                          │ stream based on   │
       │                          │ the first         │
       │                          │ indication        │
       │                          │ information       │
       │                          └─────────┬─────────┘
       │                          ┌─────────┴─────────┐
       │                          │ S440: Process the │
       │                          │ first-type data   │
       │                          │      stream       │
       │                          └─────────┬─────────┘
       │                                   │
```

FIG. 4

## Description

This application claims priority to Chinese Patent Application No. 202311136266.4, filed with the China National Intellectual Property Administration on August 31, 2023 and entitled "COMMUNICATION METHOD AND APPARATUS", which is incorporated herein by reference in its entirety.

## TECHNICAL FIELD

This application relates to the communication field, and more illustratively, to a communication method and apparatus.

## BACKGROUND

A demodulation reference signal (DeModulation Reference Signal, DMRS) is used to estimate an equivalent channel matrix of a data channel (for example, a physical downlink shared channel Physical downlink shared channel, PDSCH) or a control channel (for example, a physical downlink control channel Physical downlink control channel, PDCCH), to detect and demodulate data.

A conventional MIMO receiver supports six receive antennas, and a maximum quantity of transmitted data streams that can be supported by a single user also increases to six streams. For example, the receiver performs MIMO detection on data signals correspondingly received by the six receive antennas, to obtain detected signals corresponding to a plurality of data streams. After MIMO detection, for the detected signals corresponding to the plurality of data streams, demodulation of modulated symbols of each data stream is further performed, and then codeword-to-layer demapping (CW-to-layer demapping) is performed based on a predefined codeword-to-layer mapping relationship. When a quantity L of data streams is greater than 4, detected signals corresponding to the L data streams are demapped into two codewords, and then channel decoding is separately performed on the two codewords to obtain bit sequence estimation results. It can be learned that detection complexity of the receiver is related to a quantity of receive antennas and a quantity of data streams. As the quantity of antennas and the quantity of data streams of the receiver both increase, the complexity is high.

Therefore, how to reduce detection complexity of a receive end and improve detection performance is a problem that needs to be considered currently.

## SUMMARY

This application provides a communication method and apparatus, to reduce detection complexity of a receive end and improve detection performance.

According to a first aspect, a communication method is provided. The method may be performed by a first communication apparatus, or may be performed by a chip or a circuit used in a first communication apparatus. This is not limited in this application. For ease of description, an example in which the method is performed by the first communication apparatus is used below for description.

The method includes: receiving first indication information from a second communication apparatus, where the first indication information indicates a quantity R of data streams and an index of a first-type data stream, the first-type data stream is a same data stream included in a first data stream subset and a second data stream subset, and R is an integer greater than or equal to 2; determining the first-type data stream based on the first indication information; and processing the first-type data stream.

The first communication apparatus corresponds to a first antenna port group and a second antenna port group. The first antenna port group includes a first antenna port, and the first antenna port is configured to detect the first data stream subset in a first data stream set including the R data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream.

According to the solution provided in this application, the second communication apparatus indicates index information of the first-type data stream to the first communication apparatus by sending the first indication information, so that the second communication apparatus can flexibly perform precoding processing and flexibly control a data stream on which merging can be performed. Because the data stream on which merging can be performed has better detection performance, the second communication apparatus can flexibly adjust, as required, the data stream on which merging can be performed, and can accurately enable the first communication apparatus to learn of an accurate merging manner. In addition, the first antenna port group and the second antenna port group may be considered as two sub-receivers, and each sub-receiver detects a part of data streams in all transmitted data streams, effectively reducing detection complexity of a receive end.

For example, the first communication apparatus may be a terminal device, or may be a chip (or a chip system) or a circuit of a terminal device, and the second communication apparatus may be a network device, or may be a chip (or a chip system) or a circuit of a network device. This is not limited in this application.

It should be understood that R represents a transmission rank, and the quantity R of data streams may represent a quantity of transmitted data streams or a quantity of spatial layers (layers). In embodiments of this application, unless otherwise specified, the "data stream" and the "spatial layer" may be used interchangeably. In addition, the data stream may also be referred to as a stream or a layer.

In embodiments of this application, the "first-type data stream" may be understood as a data stream included in the two data stream subsets, a data stream existing in the two data stream subsets, or a same part of data streams included in the two data stream subsets. In other words, merging can be performed on the "first-type data stream" for the first communication apparatus. Therefore, the "first-type data stream" may alternatively be a "mergeable data stream". Correspondingly, in embodiments of this application, a data stream in the two data stream subsets other than the "first-type data stream" is collectively referred to as a "second-type data stream". Therefore, the "second-type data stream" may alternatively be a "non-mergeable data stream". This is not limited in this application.

It should be noted that "mergeable" or "merging can be performed" may be understood as follows: A signal received by a terminal receive antenna associated with the first antenna port group corresponding to the first communication apparatus is used to detect information corresponding to the first-type data stream. Similarly, a signal received by a terminal receive antenna associated with the second antenna port group corresponding to the first communication apparatus is also used to detect the information corresponding to the first-type data stream. On a receive side, the first communication apparatus may merge estimation results of the information about the first-type data stream that are obtained through detection based on the signal received by the terminal receive antenna associated with the first antenna port group and the signal received by the terminal receive antenna associated with the second antenna port group.

It should be understood that the first data stream subset and the second data stream subset belong to the first data stream set. If the quantity R of data streams included in the first data stream set is 6, which are a data stream 1, a data stream 2, a data stream 3, a data stream 4, a data stream 5, and a data stream 6, the first data stream subset includes the data stream 1, the data stream 2, the data stream 3, and the data stream 4, and the second data stream subset includes the data stream 3, the data stream 4, the data stream 5, and the data stream 6, the same data stream included in the first data stream subset and the second data stream subset is the data stream 3 and the data stream 4. In this case, the first-type data stream is the data stream 3 and the data stream 4, and correspondingly, the second-type data stream is the data stream 1, the data stream 2, the data stream 5, and the data stream 6.

Optionally, the first communication apparatus corresponds to the first antenna port group and the second antenna port group. The first antenna port group includes the first antenna port, and the first antenna port is configured to detect the first data stream subset in the first data stream set including the R data streams. The second antenna port group includes the second antenna port, and the second antenna port is configured to detect the second data stream subset in the first data stream set. The first antenna port and the second antenna port include the same part of antenna ports. The first data stream subset and the second data stream subset include the same data stream.

In other words, when the first communication apparatus is the terminal device, the first antenna port group and the second antenna port group in this implementation are antenna port groups corresponding to the terminal device, and the first antenna port group and the second antenna port group respectively correspond to a sub-receiver 1 and a sub-receiver 2 of the terminal device. In other words, the sub-receiver 1 includes an antenna port corresponding to the first antenna port group, and the sub-receiver 2 includes an antenna port corresponding to the second antenna port group. The first antenna port group and the second antenna port group may be considered as the sub-receiver 1 and the sub-receiver 2 of the terminal device, and each sub-receiver detects a part of data streams in the R transmitted data streams, effectively reducing detection complexity of the terminal device. The antenna port group corresponding to the terminal device may be a receive antenna corresponding to the terminal device. It should be understood that the first antenna port group may be mapped to a first channel sounding reference signal (sounding reference signal, SRS) port group, and the second antenna port group may be mapped to a second SRS port group. To be specific, a first SRS port in the first SRS port group corresponds to the first antenna port in the first antenna port group, and a second SRS port in the second SRS port group corresponds to the second antenna port in the second antenna port group.

Optionally, the first antenna port group and the second antenna port group may alternatively be considered as a terminal antenna port group corresponding to a first SRS port group and a terminal antenna port group corresponding to a second SRS port group. In this case, the first antenna port is a terminal antenna port corresponding to a first SRS port, and the second antenna port is a terminal antenna port corresponding to a second SRS port. In other words, an "$x^{th}$ antenna port group" or an "$x^{th}$ antenna port" in embodiments of this application may alternatively be a "terminal antenna port group corresponding to an $x^{th}$ SRS port group" or a "terminal antenna port corresponding to an $x^{th}$ SRS port".

Optionally, the first antenna port group and the second antenna port group may alternatively be considered as a first SRS port group and a second SRS port group. In this case, the first antenna port is a first SRS port, the second antenna port is a second SRS port, and the first antenna port and the second antenna port correspond to antenna ports of the terminal device.

It should be understood that, that the first antenna port is configured to detect the first data stream subset in the first data stream set including the R data streams may be understood as that a signal received by an antenna port of the terminal device corresponding to the first antenna port is used to detect the first data stream subset in the first data stream set including the R data streams. Similarly, that the second antenna port is configured to detect the second data stream subset in the first data stream set may be understood as that a signal received by an antenna port of the terminal device corresponding to the second antenna port is used to detect the second data stream subset in the second data stream set including the R data streams.

With reference to the first aspect, in some implementations of the first aspect, different values of the quantity of data streams correspond to different data stream index combination sets. The data stream index combination set includes one data stream index combination or a plurality of data stream index combinations, and each of the plurality of data stream index combinations includes at least two candidate first-type data stream indexes. The index of the first-type data stream belongs to the candidate first-type data stream indexes.

Optionally, the data stream index combination set is predefined, or the data stream index combination set is configured by using signaling. For example, signaling configuration includes configuring by using signaling sent by a base station, where the signaling may be a radio resource control (radio resource control, RRC) message, downlink control information (downlink control information, DCI), or a system information block (system information block, SIB).

According to this implementation, each quantity of data streams corresponds to a different candidate first-type data stream index combination, so that indication overheads can be effectively reduced.

With reference to the first aspect, in some implementations of the first aspect, second indication information is received from the second communication apparatus, where the second indication information indicates a demodulation reference signal DMRS port index combination, the DMRS port index combination includes a plurality of DMRS port indexes, and the plurality of DMRS port indexes are in one-to-one correspondence with the R data streams. The R data streams are detected based on the DMRS port index combination.

It should be understood that, that the plurality of DMRS port indexes are in one-to-one correspondence with the R data streams may be understood as that a quantity of DMRS port indexes is also R, that is, the quantity of DMRS port indexes is equal to the quantity of data streams. In this case, the R DMRS port indexes correspond to R DMRS ports, and the R DMRS ports are in one-to-one correspondence with the R data streams, that is, each data stream is transmitted through one DMRS port.

Optionally, the DMRS port index combination is one of a plurality of candidate DMRS port index combinations, and the plurality of candidate DMRS port index combinations are included in a DMRS port index combination set. The DMRS port index combination set may be represented in a form of a table, a function, a text, or a character string. This is not limited in this application.

Optionally, the second indication information and the first indication information may be a same message, or may be different messages. This is not limited in this application.

According to this implementation, because orthogonality guarantee capabilities of different DMRS ports are different, that is, channel estimation capabilities of different DMRS ports are different, the DMRS port index combination is indicated by the second indication information, and a difference between the channel estimation capabilities of the DMRS ports is matched with a performance difference between different data streams corresponding to a receiver, to obtain optimal performance.

With reference to the first aspect, in some implementations of the first aspect, a DMRS signal corresponding to the DMRS port index is mapped to one orthogonal frequency division multiplexing OFDM symbol. The first data stream subset corresponds to a first DMRS port, and the second data stream subset corresponds to a second DMRS port. Frequency domain orthogonal cover codes FD-OCCs corresponding to any two first DMRS ports or any two second DMRS ports satisfy that FD-OCC subsequences ($w_f(0)$, $w_f(1)$) or ($w_f(2)$, $w_f(3)$) whose lengths are 2 are orthogonal. Alternatively, any two first DMRS ports or any two second DMRS ports belong to different code division multiplexing CDM groups.

In other words, if a DMRS configured by the network device for the terminal device is a single-symbol DMRS, FD-OCCs corresponding to DMRS ports in any sub-receiver corresponding to the terminal device satisfy that FD-OCC subsequences ($w_f(0)$, $w_f(1)$) or ($w_f(2)$, $w_f(3)$) whose lengths are 2 are orthogonal, or ports whose FD-OCC subsequences ($w_f(0)$, $w_f(1)$) or ($w_f(2)$, $w_f(3)$) are not orthogonal belong to different CDM groups.

With reference to the first aspect, in some implementations of the first aspect, a first port group includes one or more third DMRS ports, and the third DMRS port is associated with a second-type data stream corresponding to the first antenna port group. A second port group includes one or more fourth DMRS ports, and the fourth DMRS port is associated with a second-type data stream corresponding to the second antenna port group. The second-type data stream is a data stream in the first data stream subset or the second data stream subset other than the first-type data stream. The third DMRS port belongs to the first DMRS port, and the fourth DMRS port belongs to the second DMRS port. FD-OCCs corresponding to any third DMRS port and any fourth DMRS port satisfy that FD-OCC sequences ($w_f(0)$, $w_f(1)$, $w_f(2)$, $w_f(3)$) whose lengths are 4 are orthogonal, and the FD-OCCs satisfy that a correlation coefficient between FD-OCC subsequences ($w_f(0)$, $w_f(1)$) or ($w_f(2)$, $w_f(3)$) whose lengths are 2 is 1.

In other words, a DMRS port (that is, a third DMRS port) corresponding to a non-mergeable data stream (that is, a second-type data stream) corresponding to the sub-receiver 1 (that is, the first antenna port group) forms a port group 1 (that is, the first port group), and a DMRS port (that is, a fourth DMRS port) corresponding to a non-mergeable data stream (that is, a second-type data stream) corresponding to the sub-receiver 2 (that is, the second antenna port group) forms a port group 2 (that is, the second port group). FD-OCCs corresponding to any DMRS port in the port group 1 and any DMRS port in the port group 2 satisfy that FD-OCC sequences ($w_f(0)$, $w_f(1)$, $w_f(2)$, $w_f(3)$) whose lengths are 4 are orthogonal, and a correlation coefficient between FD-OCC subsequences ($w_f(0)$, $w_f(1)$) or ($w_f(2)$, $w_f(3)$) whose lengths are 2 is 1.

It should be noted that the FD-OCC subsequence whose length is 2 is a subsequence including a part of elements of the FD-OCC sequence ($w_f(0)$, $w_f(1)$, $w_f(2)$, $w_f(3)$) whose length is 4. For example, ($w_f(0)$, $w_f(1)$) or ($w_f(2)$, $w_f(3)$) corresponds to a subsequence including the first two elements and a subsequence including the last two elements of the FD-OCC sequence whose length is 4. The FD-OCC sequence whose length is 4 is correspondingly mapped to four subcarriers, and the FD-OCC subsequence whose length is 2 is mapped to two of the subcarriers to which the FD-OCC sequence whose length is 4 is correspondingly mapped. Different DMRS ports correspond to different FD-OCC sequences whose lengths are 4.

According to this implementation, when the DMRS signal corresponding to the DMRS port index is mapped to one OFDM symbol, interference between the two sub-receivers is suppressed through precoding. Therefore, a port with a stronger channel estimation capability (smaller interference) is used inside each sub-receiver, and a port with a weak channel estimation capability is used between the two sub-receivers. Spatial isolation or orthogonalization is performed through precoding, so that a performance loss caused by imbalance of the channel estimation capabilities of the DMRS ports, especially in a large frequency-selective channel scenario, can be effectively avoided.

With reference to the first aspect, in some implementations of the first aspect, the first-type data stream is determined based on the DMRS port index combination. FD-OCCs corresponding to a DMRS port corresponding to the first-type data stream and a DMRS port corresponding to the second-type data stream satisfy that FD-OCC subsequences ($w_f(0)$, $w_f(1)$) or ($w_f(2)$, $w_f(3)$) whose lengths are 2 are orthogonal.

According to this implementation, the second communication apparatus may implicitly indicate the index of the first-type data stream by indicating the DMRS port index combination. Spatial isolation or orthogonalization is performed through precoding, so that the performance loss caused by the imbalance of the channel estimation capabilities of the DMRS ports, especially in the large frequency-selective channel scenario, can be effectively avoided. In addition, because a quantity of candidate DMRS port index combinations corresponding to the quantity R of data streams that is less than or equal to 4 is far greater than a quantity of DMRS port index combinations corresponding to R greater than 4, implicitly indicating the index of the first-type data stream by using the DMRS port index combination in this implementation can reduce the indication overheads.

With reference to the first aspect, in some implementations of the first aspect, a DMRS signal corresponding to the DMRS port index is mapped to two OFDM symbols. The first data stream subset corresponds to a first DMRS port, and the second data stream subset corresponds to a second DMRS port. Time domain orthogonal cover code TD-OCC sequences corresponding to any two first DMRS ports or any two second DMRS ports are orthogonal. Alternatively, FD-OCC subsequences ($w_f(0)$, $w_f(1)$) or ($w_f(2)$, $w_f(3)$) that correspond to DMRS ports whose TD-OCC sequences are not orthogonal and that have a length of 2 are orthogonal.

In other words, if a DMRS configured by the network device for the terminal device is a double-symbol DMRS, TD-OCC sequences corresponding to DMRS ports of any sub-receiver corresponding to the terminal device are orthogonal, or FD-OCC subsequences ($w_f(0)$, $w_f(1)$) or ($w_f(2)$, $w_f(3)$) that correspond to ports whose TD-OCC sequences are not orthogonal and that have a length of 2 are orthogonal.

With reference to the first aspect, in some implementations of the first aspect, a third port group includes one or more third DMRS ports, and the third DMRS port is associated with a second-type data stream corresponding to the first antenna port group. A fourth port group includes one or more fourth DMRS ports, and the fourth DMRS port is associated with a second-type data stream corresponding to the second antenna port group. The second-type data stream is a data stream in the first data stream subset or the second data stream subset other than the first-type data stream. The third DMRS port belongs to the first DMRS port, and the fourth DMRS port belongs to the second DMRS port. A correlation coefficient between TD-OCCs corresponding to any third DMRS port and any second DMRS port is 1, and FD-OCCs satisfy that FD-OCC sequences ($w_f(0)$, $w_f(1)$, $w_f(2)$, $w_f(3)$) whose lengths are 4 are orthogonal.

In other words, a DMRS port (that is, a third DMRS port) corresponding to a non-mergeable data stream (that is, a second-type data stream) corresponding to the sub-receiver 1 (that is, the first antenna port group) forms a port group 3 (that is, the third port group), and a DMRS port (that is, a fourth DMRS port) corresponding to a non-mergeable data stream (that is, a second-type data stream) corresponding to the sub-receiver 2 (that is, the second antenna port group) forms a port group 4 (that is, the fourth port group). A correlation coefficient between TD-OCCs corresponding to any DMRS port in the port group 3 and any DMRS port in the port group 4 is 1, and FD-OCC sequences ($w_f(0)$, $w_f(1)$, $w_f(2)$, $w_f(3)$) whose lengths are 4 are orthogonal.

According to this implementation, when the DMRS signal corresponding to the DMRS port index is mapped to two OFDM symbols, interference between the two sub-receivers is suppressed through precoding. Therefore, a port with a stronger channel estimation capability (smaller interference) is used inside each sub-receiver, and a port with a weak channel estimation capability is used between the two sub-receivers. Spatial isolation or orthogonalization is performed through precoding, so that a performance loss caused by imbalance of the channel estimation capabilities of the DMRS ports, especially in a large frequency-selective channel scenario, can be effectively avoided.

With reference to the first aspect, in some implementations of the first aspect, the first-type data stream is determined based on the DMRS port index combination. FD-OCCs corresponding to a DMRS port corresponding to the first-type data stream and a DMRS port corresponding to the second-type data stream satisfy that FD-OCC subsequences $(w_f(0), w_f(1))$ or $(w_f(2), w_f(3))$ whose lengths are 2 are orthogonal. Alternatively, TD-OCC sequences corresponding to a DMRS port corresponding to the first-type data stream and a DMRS port corresponding to the second-type data stream are orthogonal.

According to this implementation, the second communication apparatus may implicitly indicate the index of the first-type data stream by indicating the DMRS port index combination. Spatial isolation or orthogonalization is performed through precoding, so that the performance loss caused by the imbalance of the channel estimation capabilities of the DMRS ports, especially in the large frequency-selective channel scenario, can be effectively avoided. In addition, because a quantity of candidate DMRS port index combinations corresponding to the quantity R of data streams that is less than or equal to 4 is far greater than a quantity of DMRS port index combinations corresponding to R greater than 4, implicitly indicating the index of the first-type data stream by using the DMRS port index combination in this implementation can reduce the indication overheads.

With reference to the first aspect, in some implementations of the first aspect, third indication information is received from the second communication apparatus, where the third indication information indicates a codeword-to-layer mapping rule, and the codeword-to-layer mapping rule represents a correspondence between a first codeword, a second codeword, and the R data streams under the quantity R of data streams. It is determined, based on the codeword-to-layer mapping rule and an association relationship between different quantities of data streams and a quantity of first-type data streams, that a data stream corresponding to the first codeword is the first-type data stream, where a quantity of data streams corresponding to the first codeword is equal to the quantity of first-type data streams.

For example, the predefined quantity of first-type data streams corresponding to the quantity R of data streams is compared with the quantity of data streams mapped to the first codeword and a quantity of data streams mapped to the second codeword. If the quantity of data streams mapped to a codeword is equal to the quantity of first-type data streams, the data stream mapped to the codeword is the first-type data stream.

According to this implementation, an appropriate codeword-to-layer mapping manner is designed, so that differentiated data streams can belong to different codewords, and differentiated modulation and coding schemes can be selected, maximally improving system performance.

With reference to the first aspect, in some implementations of the first aspect, the first-type data stream in the R data streams is associated with the first codeword, the second-type data stream in the R data streams is associated with the second codeword, and the second-type data stream is a data stream in the first data stream subset or the second data stream subset other than the first-type data stream.

Optionally, the codeword-to-layer mapping rule is one of a plurality of candidate codeword-to-layer mapping rules, where the plurality of candidate codeword-to-layer mapping rules are predefined, or the plurality of candidate codeword-to-layer mapping rules are configured by using signaling. For example, signaling configuration includes configuring by using signaling sent by the base station, where the signaling may be an RRC message, downlink control information DCI, or a system information block SIB.

According to this implementation, the first-type data stream is associated with one codeword, and detection performance of the first-type data stream is better than that of the other second-type data stream. The first-type data stream and the second-type data stream are associated with different codewords, and a modulation and coding scheme is independently selected for each codeword. This can better help provide a more adaptive modulation and coding scheme for differentiated spatial layers, maximizing performance advantages of a data stream with high performance. In other words, a data stream with high detection performance and a data stream with low detection performance correspond to different codewords, so that differentiated performance of different symbols in one codeword can be avoided, and a more appropriate modulation and coding scheme is allocated to differentiated data streams. In addition, with a preset rule, the information about the first-type data stream may be implicitly indicated by indicating the codeword-to-layer mapping rule, so that the first communication apparatus can accurately perform merging.

Optionally, the association relationship between the quantity of data streams and the quantity of first-type data streams is predefined, or the association relationship between the quantity of data streams and the quantity of first-type data streams is configured by using signaling. For example, signaling configuration includes configuring by using signaling sent by the base station, where the signaling may be an RRC message, downlink control information DCI, or a system information block SIB.

For example, when the quantity R of data streams is 5, the quantity of first-type data streams is 3; or when the quantity R of data streams is 6, the quantity of first-type data streams is 2.

According to a second aspect, a communication method is provided. The method may be performed by a second communication apparatus, or may be performed by a chip or a circuit used in a second communication apparatus. This is not limited in this application. For ease of description, an example in which the method is performed by the second communication apparatus is used below for description.

The method includes: determining first indication information, where the first indication information indicates a quantity R of data streams and an index of a first-type data stream, the first-type data stream is a same data stream included in a first data stream subset and a second data stream subset, and R is an integer greater than or equal to 2; and sending the first indication information to a first communication apparatus.

The first communication apparatus corresponds to a first antenna port group and a second antenna port group. The first antenna port group includes a first antenna port, and the first antenna port is configured to detect the first data stream subset in a first data stream set including the R data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream.

According to the solution provided in this application, the second communication apparatus indicates index information of the first-type data stream to the first communication apparatus by sending the first indication information, so that the second communication apparatus can flexibly perform precoding processing and flexibly control a data stream on which merging can be performed. Because the data stream on which merging can be performed has better detection performance, the second communication apparatus can flexibly adjust, as required, the data stream on which merging can be performed, and can accurately enable the first communication apparatus to learn of an accurate merging manner. In addition, the first antenna port group and the second antenna port group may be considered as two sub-receivers, and each sub-receiver detects a part of data streams in all transmitted data streams, effectively reducing detection complexity of a receive end.

With reference to the second aspect, in some implementations of the second aspect, different values of the quantity of data streams correspond to different data stream index combination sets. The data stream index combination set includes one data stream index combination or a plurality of data stream index combinations, and each of the plurality of data stream index combinations includes at least two candidate first-type data stream indexes. The index of the first-type data stream belongs to the candidate first-type data stream indexes.

With reference to the second aspect, in some implementations of the second aspect, second indication information is sent to the first communication apparatus, where the second indication information indicates a demodulation reference signal DMRS port index combination, the DMRS port index combination includes a plurality of DMRS port indexes, the plurality of DMRS port indexes are in one-to-one correspondence with the R data streams, and the DMRS port index combination is used to detect the R data streams.

With reference to the second aspect, in some implementations of the second aspect, a DMRS signal corresponding to the DMRS port index is mapped to one orthogonal frequency division multiplexing OFDM symbol. The first data stream subset corresponds to a first DMRS port, and the second data stream subset corresponds to a second DMRS port. Frequency domain orthogonal cover codes FD-OCCs corresponding to any two first DMRS ports or any two second DMRS ports satisfy that FD-OCC subsequences ($w_f(0)$, $w_f(1)$) or ($w_f(2)$, $w_f(3)$) whose lengths are 2 are orthogonal. Alternatively, any two first DMRS ports or any two second DMRS ports belong to different code division multiplexing CDM groups.

With reference to the second aspect, in some implementations of the second aspect, a first port group includes one or more third DMRS ports, and the third DMRS port is associated with a second-type data stream corresponding to the first antenna port group. A second port group includes one or more fourth DMRS ports, and the fourth DMRS port is associated with a second-type data stream corresponding to the second antenna port group. The second-type data stream is a data stream in the first data stream subset or the second data stream subset other than the first-type data stream. The third DMRS port belongs to the first DMRS port, and the fourth DMRS port belongs to the second DMRS port.

FD-OCCs corresponding to any third DMRS port and any fourth DMRS port satisfy that FD-OCC sequences ($w_f(0)$, $w_f(1)$, $w_f(2)$, $w_f(3)$) whose lengths are 4 are orthogonal, and the FD-OCCs satisfy that a correlation coefficient between FD-OCC subsequences ($w_f(0)$, $w_f(1)$) or ($w_f(2)$, $w_f(3)$) whose lengths are 2 is 1.

With reference to the second aspect, in some implementations of the second aspect, a DMRS signal corresponding to the DMRS port index is mapped to two OFDM symbols. The first data stream subset corresponds to a first DMRS port, and the second data stream subset corresponds to a second DMRS port. Time domain orthogonal cover code TD-OCC sequences corresponding to any two first DMRS ports or any two second DMRS ports are orthogonal. Alternatively, FD-OCC subsequences ($w_f(0)$, $w_f(1)$) or ($w_f(2)$, $w_f(3)$) that correspond to DMRS ports whose TD-OCC sequences are not orthogonal and that have a length of 2 are orthogonal.

With reference to the second aspect, in some implementations of the second aspect, a third port group includes one or more third DMRS ports, and the third DMRS port is associated with a second-type data stream corresponding to the first antenna port group. A fourth port group includes one or more fourth DMRS ports, and the fourth DMRS port is associated with a second-type data stream corresponding to the second antenna port group. The second-type data stream is a data stream in the first data stream subset or the second data stream subset other than the first-type data stream. The third DMRS port belongs to the first DMRS port, and the fourth DMRS port belongs to the second DMRS port. A correlation coefficient between TD-OCCs corresponding to any third DMRS port and any second DMRS port is 1, and FD-OCCs satisfy that FD-OCC sequences ($w_f(0)$, $w_f(1)$, $w_f(2)$, $w_f(3)$) whose lengths are 4 are orthogonal.

With reference to the second aspect, in some implementations of the second aspect, third indication information is sent to the first communication apparatus, where the third indication information indicates a codeword-to-layer mapping rule, and the codeword-to-layer mapping rule represents a correspondence between a first codeword, a second codeword, and the R data streams under the quantity R of data streams. The codeword-to-layer mapping rule is used to determine that a data stream corresponding to the first codeword is the first-type data stream, and a quantity of data streams corresponding to the first codeword is equal to a quantity of first-type data streams.

With reference to the second aspect, in some implementations of the second aspect, the first-type data stream in the R data streams is associated with the first codeword, the second-type data stream in the R data streams is associated with the second codeword, and the second-type data stream is a data stream in the first data stream subset or the second data stream subset other than the first-type data stream.

With reference to the second aspect, in some implementations of the second aspect, an association relationship between the quantity of data streams and the quantity of first-type data streams is predefined, or an association relationship between the quantity of data streams and the quantity of first-type data streams is configured by using signaling.

With reference to the second aspect, in some implementations of the second aspect, when the quantity R of data streams is 5, the quantity of first-type data streams is 3; or when the quantity R of data streams is 6, the quantity of first-type data streams is 2.

For beneficial effects of the second aspect and some implementations of the second aspect, correspondingly refer to the related descriptions in the first aspect. Details are not described herein again.

According to a third aspect, a communication method is provided. The method may be performed by a first communication apparatus, or may be performed by a chip or a circuit used in a first communication apparatus. This is not limited in this application. For ease of description, an example in which the method is performed by the first communication apparatus is used below for description.

The method includes: receiving a first data stream on a first resource, where a frequency domain resource of the first resource includes X frequency domain units, each frequency domain unit is used to transmit at least two first-type data streams, the first-type data stream is a same data stream included in a first data stream subset and a second data stream subset, and X is an integer greater than or equal to 1. The first communication apparatus corresponds to a first antenna port group and a second antenna port group. The first antenna port group includes a first antenna port, and the first antenna port is configured to detect the first data stream subset in a first data stream set including R data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream.

Optionally, the method further includes: determining, based on the first data stream, an estimation result of a first signal corresponding to the first data stream. It should be understood that the first signal is a data signal sent by a transmit end (that is, a second communication apparatus).

For example, the X frequency domain units may be frequency domain units included in a scheduled data bandwidth or a part of frequency domain units included in a scheduled data bandwidth. In other words, the X frequency domain units may be frequency domain units to which a data channel is mapped or a part of frequency domain units to which a data channel is mapped.

According to the solution provided in this application, the second communication apparatus receives the first data stream on the first resource, to ensure that the first-type data stream is polled in different frequency domain units, avoiding that merging can be performed on some data streams in different frequency domain units, so that each data stream can be merged at an equal probability as much as possible. This solution can ensure more balanced performance of each data stream, and avoid performance differentiation of data streams deteriorating overall performance. In addition, the first antenna port group and the second antenna port group may be considered as two sub-receivers, and each sub-receiver detects a part of data streams in all transmitted data streams, effectively reducing detection complexity of a receive end.

With reference to the third aspect, in some implementations of the third aspect, indexes of first-type data streams in any frequency domain unit are the same, and indexes of first-type data streams in different frequency domain units are different. Alternatively, demodulation reference signal DMRS ports corresponding to first-type data streams in any frequency domain unit are the same, and DMRS ports corresponding to first-type data streams in different frequency domain units are different.

According to this implementation, an appropriate signal processing mode is designed, and different precoding matrices are used in different frequency domain units, so that indexes of first-type data streams corresponding to different frequency domain units are different. This avoids performance imbalance caused by performance of a part of data streams remaining significantly stronger than that of other data streams, and avoids differentiated performance and differentiated experience.

With reference to the third aspect, in some implementations of the third aspect, indexes of first-type data streams or indexes of DMRS ports corresponding to first-type data streams in different frequency domain units are determined in a cyclic shift manner.

According to this implementation, indexes of first-type data streams or indexes of DMRS ports corresponding to first-type data streams in different frequency domain units are set to be arranged in the cyclic shift manner, so that indexes of first-type data streams corresponding to different frequency domain units are different. This avoids performance imbalance caused by performance of a part of data streams remaining significantly stronger than that of other data streams, and ensures more balanced performance of each data stream.

With reference to the third aspect, in some implementations of the third aspect, an index set of the first-type data streams or an index set of DMRS ports corresponding to the first-type data streams corresponding to the X frequency domain units is:

$$\{(A_1^1, A_2^1, ..., A_K^1), (A_1^2, A_2^2, ..., A_K^2), ..., (A_1^X, A_2^X, ..., A_K^X)\};$$

Indexes of first-type data streams or indexes of DMRS ports corresponding to first-type data streams corresponding to two adjacent frequency domain units satisfy:

$$A_1^n = (A_1^{n-1} + \Delta) \bmod R;$$

K represents a quantity of first-type data streams in each frequency domain unit. $A_i^j$ represents an index of an $i$th data stream or an index of a DMRS port corresponding to an $i$th data stream in the first-type data streams corresponding to a $j$th frequency domain unit. R represents a quantity of first data streams. $\Delta$ represents a cyclic shift offset. n is an integer greater than or equal to 1 and less than or equal to X. $\Delta$ is a constant. j is an integer greater than or equal to 1 and less than or equal to X. $i$ is an integer greater than or equal to 1 and less than or equal to K. $A_i^j$ is an integer greater than or equal to 0 and less than R, or $A_i^j$ is an integer greater than or equal to 0 and less than a maximum port index in an allocated DMRS port combination. K is an integer greater than or equal to 2.

It should be noted that the two adjacent frequency domain units may be two frequency domain units with consecutive indexes (for example, frequency domain units corresponding to a frequency domain unit index a and a frequency domain unit index a+1), or two frequency domain units with a minimum frequency domain spacing in the frequency domain units to which the data channel is mapped.

With reference to the third aspect, in some implementations of the third aspect, the X frequency domain units are included in Y frequency domain unit groups, and an index set of first-type data streams or an index set of DMRS ports corresponding to first-type data streams corresponding to N frequency domain units included in each frequency domain unit group is:

$$\{(A_1^1, A_2^1, ..., A_K^1), (A_1^2, A_2^2, ..., A_K^2), ..., (A_1^N, A_2^N, ..., A_K^N)\};$$

Indexes of first-type data streams or indexes of DMRS ports corresponding to first-type data streams corresponding to two adjacent frequency domain units satisfy:

$$A_1^n = (A_1^{n-1} + \Delta) \bmod R;$$

K represents a quantity of first-type data streams in each frequency domain unit. $A_i^j$ represents an index of an $i$th data stream or an index of a DMRS port corresponding to an $i$th data stream in the first-type data streams corresponding to a $j$th frequency domain unit. R represents a quantity of first data streams. $\Delta$ represents a cyclic shift offset. n is an integer greater than or equal to 1 and less than or equal to N. $\Delta$ is a constant. $j$ is an integer greater than or equal to 1 and less than or equal to N. $i$ is an integer greater than or equal to 1 and less than or equal to K. N is an integer greater than 1 and less than or equal to $X$. $Y$ is an integer greater than or equal to 1. $A_i^j$ is an integer greater than or equal to 0 and less than R, or $A_i^j$ is an integer greater than or equal to 0 and less than a maximum port index in an allocated DMRS port combination. K is an integer greater than or equal to 2.

It should be understood that first-type data streams corresponding to $k^{th}$ frequency domain units in different frequency domain unit groups are the same, where k is greater than or equal to 1 and less than or equal to N. For example, there are two frequency domain unit groups, each frequency domain unit group includes three frequency domain units, and each frequency domain unit includes two mergeable data streams (that is, first-type data streams). In this case, first-type data streams corresponding to a $k^{th}$ frequency domain unit in a $1^{st}$ frequency domain unit group are the same as first-type data streams corresponding to a $k^{th}$ frequency domain unit in a $2^{nd}$ frequency domain unit group. For example, a quantity R of transmitted data streams is 6. A sub-receiver 1 corresponds to data streams 0 to 2, and a sub-receiver 2 corresponds to data streams 3 to 5. There are six frequency domain units, which are frequency domain units 0 to 5, and the six subbands are included in two frequency domain unit groups. In other words, each frequency domain unit group includes three frequency domain units, for example, a frequency domain unit group 1 {frequency domain units 0, 1, 2} and a frequency domain unit group 2 {frequency domain units 3, 4, 5}. In the frequency domain unit group 1 and the frequency domain unit group 2, indexes of first-type data streams corresponding to the frequency domain units 0 and 3 are {0, 1}, indexes of first-type data streams corresponding to the frequency domain units 1 and 4 are {2, 3}, and indexes of first-type data streams corresponding to the frequency domain units 2 and 5 are {4, 5}. In other words, first-type data streams corresponding to same frequency domain units in different frequency domain unit groups are also the same.

It should be noted that the two adjacent frequency domain units may be two frequency domain units with consecutive indexes (for example, frequency domain units corresponding to a frequency domain unit index a and a frequency domain unit index a+1), or two frequency domain units with a minimum frequency domain spacing in the frequency domain units to which the data channel is mapped.

According to this implementation, different precoding matrices are used in different frequency domain units, so that indexes of first-type data streams corresponding to different frequency domain units are different. This avoids performance imbalance caused by performance of a part of data streams remaining significantly stronger than that of other data streams, and ensures more balanced performance of each data stream.

According to a fourth aspect, a communication method is provided. The method may be performed by a first communication apparatus, or may be performed by a chip or a circuit used in a first communication apparatus. This is not limited in this application. For ease of description, an example in which the method is performed by the first communication apparatus is used below for description.

The method includes: determining a to-be-sent first signal; and sending a first data stream to a first communication apparatus on a first resource, where the first data stream is determined based on the first signal, a frequency domain resource of the first resource includes X frequency domain units, the frequency domain unit includes one or more resource blocks RBs, each frequency domain unit includes at least two first-type data streams, the first-type data stream is a same data stream included in a first data stream subset and a second data stream subset, and X is an integer greater than 1. The first communication apparatus corresponds to a first antenna port group and a second antenna port group. The first antenna port group includes a first antenna port, and the first antenna port is configured to detect the first data stream subset in a first data stream set including R data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream. The first-type data stream is the same data stream included in the first data stream subset and the second data stream subset.

According to the solution provided in this application, the second communication apparatus receives the first data stream on the first resource, to ensure that the first-type data stream is polled in different frequency domain units, avoiding that merging can be performed on some data streams in different frequency domain units, so that each data stream can be merged at an equal probability as much as possible. This solution can ensure more balanced performance of each data stream, and avoid performance differentiation of data streams deteriorating overall performance. In addition, the first antenna port group and the second antenna port group may be considered as two sub-receivers, and each sub-receiver detects a part of data streams in all transmitted data streams, effectively reducing detection complexity of a receive end.

With reference to the fourth aspect, in some implementations of the fourth aspect, indexes of first-type data streams in any frequency domain unit are the same, and indexes of first-type data streams in different frequency domain units are different. Alternatively, demodulation reference signal DMRS ports corresponding to first-type data streams in any frequency domain unit are the same, and DMRS ports corresponding to first-type data streams in different frequency domain units are different.

With reference to the fourth aspect, in some implementations of the fourth aspect, indexes of first-type data streams or indexes of DMRS ports corresponding to first-type data streams in different frequency domain units are determined in a cyclic shift manner.

With reference to the fourth aspect, in some implementations of the fourth aspect, an index set of the first-type data streams or an index set of DMRS ports corresponding to the first-type data streams corresponding to the X frequency domain units is:

$$\{(A_1^1, A_2^1, ..., \ A_K^1), (A_1^2, A_2^2, ..., \ A_K^2), ..., (A_1^X, A_2^X, ..., A_K^X)\};$$

Indexes of first-type data streams or indexes of DMRS ports corresponding to first-type data streams corresponding to two adjacent frequency domain units satisfy:

$$A_1^n = (A_1^{n-1} + \Delta) mod \ R;$$

K represents a quantity of first-type data streams in each frequency domain unit. $A_i^j$ represents an index of an $i^{th}$ data stream or an index of a DMRS port corresponding to an $i^{th}$ data stream in the first-type data streams corresponding to a $j^{th}$ frequency domain unit. R represents a quantity of first data streams. $\Delta$ represents a cyclic shift offset. $n$ is an integer greater than or equal to 1 and less than or equal to X. $\Delta$ is a constant. j is an integer greater than or equal to 1 and less than or equal to X. i is an integer greater than or equal to 1 and less than or equal to K. $A_i^j$ is an integer greater than or equal to 0 and less than R, or $A_i^j$ is an integer greater than or equal to 0 and less than a maximum port index in an allocated DMRS port combination. K is an integer greater than or equal to 2.

With reference to the fourth aspect, in some implementations of the fourth aspect, the X frequency domain units are included in Y frequency domain unit groups, and an index set of first-type data streams or an index set of DMRS ports corresponding to first-type data streams corresponding to N frequency domain units included in each frequency domain unit group is:

$$\{(A_1^1, A_2^1, ..., \ A_K^1), (A_1^2, A_2^2, ..., \ A_K^2), ..., (A_1^N, A_2^N, ..., A_K^N)\};$$

Indexes of first-type data streams or indexes of DMRS ports corresponding to first-type data streams corresponding to two adjacent frequency domain units satisfy:

$$A_1^n = (A_1^{n-1} + \Delta) mod \ R;$$

K represents a quantity of first-type data streams in each frequency domain unit. $A_i^j$ represents an index of an $i^{th}$ data stream or an index of a DMRS port corresponding to an $i^{th}$ data stream in the first-type data streams corresponding to a $j^{th}$ frequency domain unit. R represents a quantity of first data streams. $\Delta$ represents a cyclic shift offset. n is an integer greater than or equal to 1 and less than or equal to N. $\Delta$ is a constant. j is an integer greater than or equal to 1 and less than or equal to N. i is an integer greater than or equal to 1 and less than or equal to K. N is an integer greater than 1 and less than or equal to X. Y is an integer greater than or equal to 1. $A_i^j$ is an integer greater than or equal to 0 and less than R, or $A_i^j$ is an integer greater than or equal to 0 and less than a maximum port index in an allocated DMRS port combination. K is an integer greater than or equal to 2.

For beneficial effects of the fourth aspect and some implementations of the fourth aspect, correspondingly refer to the related descriptions in the third aspect. Details are not described herein again.

According to a fifth aspect, a first communication apparatus is provided, for example, a terminal device or a chip or a circuit of a terminal device. The first communication apparatus includes: a transceiver unit, configured to receive first indication information from a second communication apparatus, where the first indication information indicates a quantity R of data streams and an index of a first-type data stream, the first-type data stream is a same data stream included in a first data stream subset and a second data stream subset, and R is an integer greater than or equal to 2; and a processing unit, configured to determine the first-type data stream based on the first indication information. The processing unit is further configured to process the first-type data stream. The first communication apparatus corresponds to a first antenna port group and a second antenna port group. The first antenna port group includes a first antenna port, and the first antenna port is configured to detect the first data stream subset in a first data stream set including the R data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream.

The transceiver unit may perform receiving and sending in the first aspect, and the processing unit may perform processing other than receiving and sending in the first aspect.

According to a sixth aspect, a second communication apparatus is provided, for example, a network device or a chip or a circuit of a network device. The second communication apparatus includes: a processing unit, configured to determine first indication information, where the first indication information indicates a quantity $R$ of data streams and an index of a first-type data stream, the first-type data stream is a same data stream included in a first data stream subset and a second data stream subset, and $R$ is an integer greater than or equal to 2; and a transceiver unit, configured to send the first indication information to a first communication apparatus. The first communication apparatus corresponds to a first antenna port group and a second antenna port group. The first antenna port group includes a first antenna port, and the first antenna port is configured to detect the first data stream subset in a first data stream set including the $R$ data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream.

The transceiver unit may perform receiving and sending in the second aspect, and the processing unit may perform processing other than receiving and sending in the second aspect.

According to a seventh aspect, a first communication apparatus is provided, for example, a terminal device or a chip or a circuit of a terminal device. The first communication apparatus includes: a transceiver unit, configured to receive a first data stream on a first resource, where a frequency domain resource of the first resource includes $X$ frequency domain units, each frequency domain unit is used to transmit at least two first-type data streams, the first-type data stream is a same data stream included in a first data stream subset and a second data stream subset, and $X$ is an integer greater than or equal to 1; and a processing unit, configured to determine, based on the first data stream, an estimation result of a first signal corresponding to the first data stream. The first communication apparatus corresponds to a first antenna port group and a second antenna port group. The first antenna port group includes a first antenna port, and the first antenna port is configured to detect the first data stream subset in a first data stream set including $R$ data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream.

The transceiver unit may perform receiving and sending in the third aspect, and the processing unit may perform processing other than receiving and sending in the third aspect.

According to an eighth aspect, a second communication apparatus is provided, for example, a network device or a chip or a circuit of a network device. The second communication apparatus includes: a processing unit, configured to determine a to-be-sent first signal; and a transceiver unit, configured to send a first data stream to a first communication apparatus on a first resource, where the first data stream is determined based on the first signal, a frequency domain resource of the first resource includes $X$ frequency domain units, the frequency domain unit includes one or more resource blocks RBs, each frequency domain unit includes at least two first-type data streams, the first-type data stream is a same data stream included in a first data stream subset and a second data stream subset, and $X$ is an integer greater than 1. The first communication apparatus corresponds to a first antenna port group and a second antenna port group. The first antenna port group includes a first antenna port, and the first antenna port is configured to detect the first data stream subset in a first data stream set including $R$ data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream.

The transceiver unit may perform receiving and sending in the fourth aspect, and the processing unit may perform processing other than receiving and sending in the fourth aspect.

According to a ninth aspect, a communication apparatus is provided, including a transceiver, a processor, and a memory. The processor is configured to control the transceiver to send and receive signals. The memory is configured to store a computer program. The processor is configured to invoke the computer program from the memory and run the computer program, so that the communication apparatus performs the method according to any one of the possible implementations of the first aspect to the fourth aspect.

Optionally, there is one or more processors, and there is one or more memories.

Optionally, the memory may be integrated with the processor, or the memory and the processor are separately disposed.

Optionally, the communication apparatus further includes a transmitter machine (transmitter) and a receiver machine (receiver).

According to a tenth aspect, a communication system is provided, including a first communication apparatus and a second communication apparatus. The first communication apparatus is configured to perform the method according to any one of the possible implementations of the first aspect or the third aspect. The second communication apparatus is configured to perform the method according to any one of the possible implementations of the second aspect or the fourth aspect.

According to an eleventh aspect, a computer-readable storage medium is provided. The computer-readable storage medium stores a computer program or code. When the computer program or code is run on a computer, the computer is enabled to perform the method according to any one of the possible implementations of the first aspect to the fourth aspect.

According to a twelfth aspect, a chip is provided, including at least one processor. The at least one processor is coupled to a memory. The memory is configured to store a computer program. The processor is configured to invoke the computer program from the memory and run the computer program, so that an apparatus on which the chip system is installed performs the method according to any one of the possible implementations of the first aspect to the fourth aspect.

The chip may include an input circuit or interface configured to send information or data and an output circuit or interface configured to receive information or data.

According to a thirteenth aspect, a computer program product is provided. The computer program product includes computer program code. When the computer program code is run on a communication apparatus, the apparatus is enabled to perform the method according to any one of the possible implementations of the first aspect to the fourth aspect.

## BRIEF DESCRIPTION OF DRAWINGS

FIG. 1 is a diagram of a wireless communication system applicable to an embodiment of this application;
FIG. 2 is a diagram of a structure of a 6R receiver;
FIG. 3 is a diagram of time-frequency resource mapping of different types of DMRSs;
FIG. 4 is a schematic flowchart of a communication method 400 according to an embodiment of this application;
FIG. 5 is a diagram of a relationship between FD-OCC sequences of different ports for an eType 1 single-symbol DMRS according to an embodiment of this application;
FIG. 6 is a diagram of a relationship between FD-OCC sequences of different ports for an eType 1 double-symbol DMRS according to an embodiment of this application;
FIG. 7 is a schematic flowchart of a communication method 700 according to an embodiment of this application;
FIG. 8 is a diagram of indexes of first-type data streams in different frequency domain subbands according to an embodiment of this application;
FIG. 9 is a diagram of a structure of a communication apparatus 1000 according to an embodiment of this application;
FIG. 10 is a diagram of a structure of a communication apparatus 2000 according to an embodiment of this application; and
FIG. 11 is a diagram of a structure of a chip system 3000 according to an embodiment of this application.

## DESCRIPTION OF EMBODIMENTS

The following describes technical solutions of embodiments of this application with reference to accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In an example, V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V means communication between vehicles. V2P means communication between a vehicle and a person (including a pedestrian, a bicyclist, a driver, a passenger, or the like). V2I means communication between a vehicle and an infrastructure. The infrastructure is, for example, a road side unit (road side unit, RSU) or a network device. The RSU includes two types: a terminal-type RSU, where because the terminal-type RSU is deployed on a road side, the terminal-type RSU is in a non-mobile state, and mobility does not need to be considered; and a base station-type RSU, which may provide timing synchronization and resource scheduling for a vehicle that communicates with the base station-type RSU. V2N means communication between a vehicle and a network device. It may be understood that the foregoing descriptions are examples, and do not constitute any limitation on embodiments of this application. For example, V2X may further include NR system-based V2X communication in current 3GPP Rel-16 and later releases.

A terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network, or a terminal device in a future evolved public land mobile network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on a body or integrated into clothes or an accessory of a user. The wearable device is not only a hardware device, but also implements a powerful function through software support, data exchange, and cloud interaction. In a broad sense, the wearable intelligent device includes a full-featured and large-sized devices that can implement all or a part of functions without depending on a smartphone, for example, a smart watch or smart glasses, and a device that is dedicated to only one type of application function and needs to work with another device such as a smartphone, for example, various smart bands or smart jewelry for monitoring physical signs.

In embodiments of this application, an apparatus configured to implement a function of the terminal device, that is, a terminal apparatus, may be the terminal device; or may be an apparatus that can support the terminal device in implementing the function, for example, a chip system or a chip, where the apparatus may be installed in the terminal device. In embodiments of this application, the chip system may include a chip, or may include a chip and another discrete component.

In embodiments of this application, a network device may be a device for communicating with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may alternatively be the following names, for example, a NodeB (NodeB), an evolved base station (evolved NodeB, eNB), a next generation base station (next generation NodeB, gNB), a relay station, an access point, a transmitting and receiving point (transmitting and receiving point, TRP), a transmitting point (transmitting point, TP), a master station, a secondary station, a multi-standard radio (motor slide retainer, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node.

In different systems, the CU (or the CU-CP and the CU-UP), the DU, or the RU may also have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

In embodiments of this application, an apparatus configured to implement a function of the network device may be the network device; or may be an apparatus that can support the network device in implementing the function, for example, a chip system or a chip, where the apparatus may be installed in the network device. In embodiments of this application, the chip system may include a chip, or may include a chip and another discrete component.

The network device and the terminal device may be deployed on land, including an indoor or outdoor device, a handheld device, or a vehicle-mounted device; or may be deployed on a water surface; or may be deployed on an airplane, a balloon, or a satellite in air. Scenarios in which the network device and the terminal device are located are not limited in embodiments of this application.

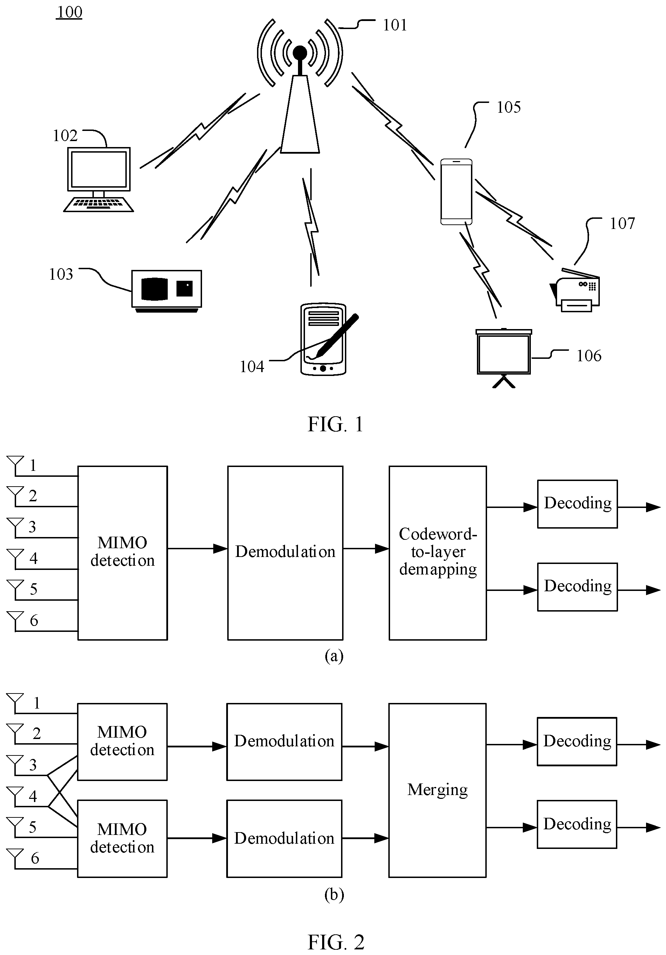

A communication system applicable to embodiments of this application is briefly described below with reference to FIG. 1.

FIG. 1 is a diagram of a wireless communication system applicable to an embodiment of this application. As shown in FIG. 1, the communication system 100 may include at least one network device, for example, a network device 101 shown in FIG. 1. The communication system 100 may further include at least one terminal device, for example, terminal devices 102 to 107 shown in FIG. 1. The terminal devices 102 to 107 may be mobile or fixed. The network device 101 may provide communication coverage for a specific geographical area, and the terminal devices 102 to 107 may be terminal devices located in the coverage area. The network device 101 may communicate with one or more of the terminal devices 102 to 107 through a radio link.

Optionally, the terminal devices may directly communicate with each other. For example, direct communication between the terminal devices may be implemented by using a device-to-device (device-to-device, D2D) technology. As shown in FIG. 1, the D2D technology may be used for direct communication between the terminal device 105 and the terminal device 106 and between the terminal device 105 and the terminal device 107. The terminal device 106 and the terminal device 107 may separately or simultaneously communicate with the terminal device 105.

Alternatively, the terminal devices 105 to 107 may separately communicate with the network device 101. For example, direct communication with the network device 101 may be implemented. For example, the terminal devices 105 and 106 in the figure may directly communicate with the network device 101. Alternatively, indirect communication with the network device 101 may be implemented. For example, the terminal device 107 in the figure communicates with the network device 101 via the terminal device 105.

A plurality of antennas may be configured for each communication device in the communication system 100 shown in FIG. 1. The plurality of antennas configured for each communication device may include at least one transmit antenna configured to send a signal and at least one receive antenna configured to receive a signal. Therefore, the communication devices in the communication system 100 may communicate with each other by using a multiple-input multiple-output (Multiple-Input Multiple-Output, MIMO) technology.

It should be understood that FIG. 1 is merely a simplified diagram of an example for ease of understanding. The communication system 100 may further include another network device or another terminal device, which is not shown in FIG. 1. Embodiments of this application are applicable to any communication scenario in which a transmit-end device communicates with a receive-end device.

The following uses an example in which a reference signal is a DMRS to describe in detail a reference signal sending and receiving method in embodiments of this application with reference to the accompanying drawings. It should be understood that in the following method, a transmit-end device may correspond to, for example, the network device 101 in FIG. 1, and a receive-end device may correspond to any one of a plurality of terminal devices communicatively connected to the network device, for example, any one of the terminal devices 102 to 107 in FIG. 1.

It should be noted that a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device and the network device, or functional modules that can invoke and execute the program in the terminal device and the network device.

In a multi-antenna MIMO technology, a transmit end and a receive end are configured with a plurality of transmit antennas and a plurality of receive antennas, and a plurality of data streams may be simultaneously transmitted through spatial multiplexing, increasing a system transmission rate by multiple times. With continuous improvement of a multi-antenna technology, a quantity of antennas supported by the terminal device further increases, for example, to six terminal receive antennas. In addition, a maximum rank of transmitted data streams (or spatial layers) that can be supported by a single user also increases to 6.

FIG. 2 is a diagram of a structure of a 6R receiver. In a conventional 6R receiver shown in (a) in FIG. 2, the 6R receiver has six terminal receive antennas 1, 2, 3, 4, 5, and 6. Joint MIMO detection is first performed on a data signal vector

$\mathbf{y} = \begin{pmatrix} y_1 \\ y_2 \\ \vdots \\ y_6 \end{pmatrix}$ received by the six terminal receive antennas, to obtain a data signal vector $\mathbf{z} = \begin{pmatrix} z_1 \\ z_2 \\ \vdots \\ z_R \end{pmatrix}$ corresponding

to R data streams. R represents a transmission rank, and is also referred to as a quantity of transmitted data streams or a quantity of spatial layers. If a linear MIMO detector is used, MIMO detection may be represented as z = By. B is a MIMO equalization matrix or a MIMO detection matrix. For the 6R receiver, a dimension of the matrix B is $R \times 6$. B may be a detection matrix corresponding to a zero forcing receiver or an MMSE detection receiver. In addition, a non-linear detector such as reason maximum likelihood detection may alternatively be used. After MIMO detection, for detected signals corresponding to the R data streams, demodulation of modulated symbols of each data stream is further performed, and then codeword-to-layer demapping (CW-to-Layer demapping) is performed based on a predefined codeword-to-layer mapping relationship. For example, when a quantity R of data streams is greater than 4, the detected signals corresponding to the R data streams are demapped into two codewords, and then channel decoding is separately performed on the two codewords to obtain bit sequence estimation results. However, detection complexity of the conventional 6R receiver is related to a quantity of terminal receive antennas and the rank, so that the complexity is high. Especially, after the non-linear receiver is used, the complexity increases exponentially as the quantity of data streams increases.

In a low-complexity 6R receiver shown in (b) in FIG. 2, six terminal receive antennas are grouped into two antenna port groups. For example, antennas 1, 2, 3, and 4 correspond to an antenna port group 1, and antennas 3, 4, 5, and 6 correspond to an antenna port group 2, where the antennas 3 and 4 appear in the two antenna port groups. MIMO detection is separately performed on the two antenna port groups, where linear MIMO detection or non-linear MIMO detection may be used. A detection method is the same as that of conventional MIMO detection, and each antenna group detects only signals of a maximum of four data streams. For example, a total quantity R of transmitted data streams is 6. The antenna port group 1 correspondingly detects data streams 1, 2, 3, and 4, and the antenna port group 2 correspondingly detects data streams 3, 4, 5, and 6. In this case, the two antenna port groups may be considered as two sub-receivers, and each sub-receiver detects a part of data streams in all transmitted data streams, effectively reducing detection complexity of a receive end. Considering that there are partially overlapping data streams in the data streams detected by the two sub-receivers, after a detected signal corresponding to each data stream is demodulated, the overlapping data streams included in the two sub-receivers are merged. Then, codeword-to-layer demapping is performed on detected signals corresponding to the R data streams after merging, and channel decoding is separately performed on two codewords to obtain bit sequence estimation results.

Compared with the conventional 6R receiver, the low-complexity 6R receiver does not have a joint detection capability for all data streams. Therefore, interference between the two sub-receivers cannot be effectively suppressed at the receive end. To ensure performance of the low-complexity 6R receiver, a transmit end usually needs to perform corresponding cooperation processing. For example, the transmit end may pre-cancel the interference between the two sub-receivers by using an effective precoding design. For example, the quantity R of data streams is 6. The transmit end may perform a precoding operation x = Ws on a transmit symbol vector $\mathbf{s} = \begin{pmatrix} s_1 \\ s_2 \\ \vdots \\ s_6 \end{pmatrix}$ by using a precoding matrix W whose dimension is $N_T \times R$, and correspondingly, a received signal obtained by the receive end may be represented as y = HWs + n, where H represents a channel matrix, and n represents a corresponding noise and interference vector. To effectively suppress the interference between the two sub-receivers corresponding to the low-complexity 6R receiver, the precoding matrix W needs to be designed, so that an equivalent channel matrix

$\widetilde{\mathrm{H}} = \mathrm{HW} = \begin{pmatrix} H_1 W_1 & H_1 W_2 & H_1 W_3 \\ H_2 W_1 & H_2 W_2 & H_2 W_3 \\ H_3 W_1 & H_3 W_2 & H_3 W_3 \end{pmatrix}$ satisfies $H_2 W_1 \cong 0$, $H_3 W_1 \cong 0$, $H_1 W_3 \cong 0$, and $H_2 W_3 \cong 0$. $H_1$, $H_2$, and

$H_3$ represent channel matrices corresponding to the terminal receive antenna 1/2, the terminal receive antenna 3/4, and the terminal receive antenna 5/6. $W_1$, $W_2$, and $W_3$ represent precoding matrices corresponding to the data stream 1/2, the data stream 3/4, and the data stream 5/6. Therefore, the data stream 1/2 and the data stream 5/6 have good spatial orthogonality, and the data stream 3/4 and the data stream 1/2/5/6 have good spatial orthogonality.

For the low-complexity 6R receiver, because the sub-receivers corresponding to the two antenna groups include partially overlapping data streams (for example, the data stream 3 and the data stream 4), the partially overlapping data streams are detected by the two sub-receivers and then merged. Therefore, performance of the partially overlapping data streams is usually better than performance of the other data streams. To be specific, SINRs of the data stream 3 and the data stream 4 (a layer 3 and a layer 4) are significantly better than signal to interference plus noise ratios (signal to interference plus noise ratios, SINRs) of the other data streams. This may result in a problem of unbalanced performance of each data stream.

For ease of understanding embodiments of this application, terms or technologies in this application are briefly described first.

(1) Antenna port (antenna port)

The antenna port is referred to as a port (port) for short, and may be understood as a transmit antenna identified by a receive end or a transmit antenna that may be distinguished spatially. The transmit antenna may be a virtual antenna or a space domain resource. The receive end may be a network device or a terminal device. Each virtual antenna or space domain resource may correspond to one antenna port, and each virtual antenna may be a weighted combination of a plurality of physical antennas. Antenna ports may be classified into reference signal ports and data ports based on different signals carried by the antenna ports. The reference signal port may include but is not limited to an SRS port, a DMRS port, a channel state information-reference signal (channel state information-reference signal, CSI-RS) port, and the like. For the DMRS port, each antenna port corresponds to one spatial stream or one spatial layer. Each DMRS port corresponds to one port index. Each DMRS port corresponds to one DMRS sequence, each DMRS port corresponds to one or more time-frequency resources, and the corresponding DMRS sequence is mapped, according to a rule, to a time-frequency resource unit included in the one or more time-frequency resources. The DMRS sequence may also be referred to as a DMRS symbol sequence or a DMRS symbol vector. The time-frequency resource unit may be a frequency domain subcarrier, an orthogonal frequency division multiplexing (orthogonal frequency division multiplexing, OFDM) symbol, or a resource element (resource element, RE). For the SRS port, each antenna port corresponds to one terminal antenna, and the terminal antenna is also referred to as a terminal receive antenna or a terminal antenna port. Each SRS port corresponds to one SRS sequence mapped to a corresponding time-frequency resource unit.

In this application, a port corresponding to a port index X may be referred to as a port X for short, or the port index X may correspond to a port index 1000+X, where X is an integer. For example, a port corresponding to a port index 0 may be referred to as a port 0 for short, and a port corresponding to a port index 1 may be referred to as a port 1 for short. For example, the port index 1000 may alternatively represent a port index 0, and the port index 1001 may alternatively represent a port index 1. In other words, a port corresponding to the port index 1000 or the port index 0 may be referred to as the port 0 for short, and a port corresponding to the port index 1001 or the port index 1 may be referred to as the port 1 for short.

In this application, an example in which a reference signal is a DMRS is used, but this application is not limited thereto. For example, the reference signal may be another reference signal, for example, a channel state information-reference signal CSI-RS, a channel sounding reference signal (sounding reference signal, SRS), a phase tracking reference signal (phase tracking reference signal, PTRS), or a tracking reference signal (tracking reference signal, TRS).

(2) Spatial layer

In a spatial multiplexing MIMO system, a plurality of parallel data streams may be simultaneously transmitted on a same time-frequency resource, and each data stream is referred to as a spatial layer, a spatial stream, or a layer. For a terminal device, a quantity of spatial layers or data streams that are correspondingly sent or received may also be referred to as a rank (rank). The quantity of spatial layers or data streams that are correspondingly sent or received may also be referred to as a value of the rank or a rank value.

(3) Demodulation reference signal (dedicated demodulation reference signal, DMRS)

The DMRS is used to estimate an equivalent channel matrix of a data channel or a control channel for data detection and demodulation. For example, the data channel may be a physical downlink shared channel (physical downlink shared channel, PDSCH) or a physical uplink shared channel (physical uplink shared channel, PUSCH), and the control channel may be a physical downlink control channel (physical downlink control channel, PDCCH).

The data channel PDSCH is used as an example. Same precoding is usually performed on the DMRS and a sent data signal, to ensure that the DMRS and the data signal pass through a same equivalent channel. It is assumed that a DMRS vector sent by a transmit end is s, a sent data signal vector is x, and same precoding (multiplying by a same precoding matrix) is performed on the DMRS and the data signal. A data signal vector y and a DMRS vector r that are received by a receive end may be respectively represented by using Formula (1) and Formula (2):

$$y = HPx + n = \widetilde{H}x + n \tag{1}$$

$$r = HPs + n = \widetilde{H}s + n \tag{2}$$

$\widetilde{H}$ represents an equivalent channel through which the data signal and the DMRS pass, and n represents additive noise. Based on the known DMRS vector s, the receive end may obtain an estimation of the equivalent channel $\widetilde{H}$ by using a channel estimation algorithm, for example, through least square (least square, LS) channel estimation or minimum mean square error (minimum mean square error, MMSE) channel estimation. Demodulation of the data signal may be completed based on the equivalent channel.

With introduction of a MIMO technology into a wireless communication system, the transmit end may transmit multi-stream data on a same time-frequency resource, and the receive end may recover all the multi-stream data. In this case, the DMRS is used to estimate an equivalent channel matrix whose dimension may be $N_R \times R$, where $N_R$ represents a quantity of terminal receive antennas, and R represents a quantity of transport streams (also referred to as a quantity of transmission layers, a quantity of spatial layers, or a rank). Generally, one DMRS port (port) corresponds to one transport stream, that is, for MIMO transmission whose quantity of transport streams is R, a quantity of needed DMRS ports is R. To ensure channel estimation quality, different DMRS ports are usually orthogonal ports. DMRS symbols corresponding to different DMRS ports are orthogonal in frequency domain, time domain, or code domain.

Because the DMRS occupies a time-frequency resource, DMRS overheads need to be reduced as much as possible. To reduce mutual interference, DMRS resources corresponding to a plurality of DMRS ports are usually mapped to a preset time-frequency resource in a frequency division multiplexing FDM, time division multiplexing TDM, or code division multiplexing manner. For one DMRS port, to perform channel estimation on different time-frequency resources, a plurality of DMRSs need to be sent on a plurality of time-frequency resources. A plurality of DMRS symbols corresponding to one port correspond to one DMRS sequence. One DMRS sequence includes a plurality of DMRS sequence elements. According to a preset time-frequency resource mapping rule, one reference signal sequence corresponding to one DMRS port is multiplied by a corresponding cover code sequence and then mapped to a corresponding time-frequency resource.

For example, the DMRS sequence is generated by using a gold sequence. An $n^{th}$ DMRS sequence element of the DMRS sequence r(n) may be generated by using the following formula:

$$r(n) = \frac{1}{\sqrt{2}}(1 - 2 \cdot c(2n)) + j\frac{1}{\sqrt{2}}(1 - 2 \cdot c(2n+1)) \tag{3}$$

A pseudo-random sequence $c(n)$ may be a gold sequence whose sequence length is 31. For a sequence $c(n)$ whose output length is $M_{PN}$, n = 0,1,..., $M_{PN}$ - 1, the sequence may be determined according to Formula (4):

$$c(n) = \left(x_1(n + N_C) + x_2(n + N_C)\right) \bmod 2$$
$$x_1(n + 31) = \left(x_1(n + 3) + x_1(n)\right) \bmod 2 \tag{4}$$
$$x_2(n + 31) = \left(x_2(n + 3) + x_2(n + 2) + x_2(n + 1) + x_2(n)\right) \bmod 2$$

$N_C$ = 1600. A $1^{st}$ m-sequence $x_1(n)$ may be initialized to $x_1(0) = 1$, $x_1(n) = 0$, n = 1,2,...,30, and a $2^{nd}$ m-sequence $x_2(n)$ may be initialized by using a parameter $c_{init}$, where $c_{init}$ may be determined according to Formula (5):

$$c_{\text{init}} = \left(2^{17}\left(N_{\text{symb}}^{\text{slot}} n_{\text{s,f}}^{\mu} + l + 1\right)\left(2N_{\text{ID}}^{\bar{n}_{\text{SCID}}^{\bar{\lambda}}} + 1\right) + 2^{17}\left\lfloor\frac{\bar{\lambda}}{2}\right\rfloor + 2N_{\text{ID}}^{\bar{n}_{\text{SCID}}^{\bar{\lambda}}} + \bar{n}_{\text{SCID}}^{\bar{\lambda}}\right) \bmod 2^{31} \tag{5}$$

$l$ represents an index value of an OFDM symbol in one slot. $N_{symb}^{slot}$ is a quantity of symbols included in one slot. $n_{s,f}^{\mu}$ is a slot index in one system frame. $\bar{n}_{\text{SCID}}^{\bar{\lambda}}$ is an initialization parameter, and may be valued to 0 or 1. $n_{s,f}^{\mu}$ represents a slot index in one system frame. $N_{\text{ID}}^{0}, N_{\text{ID}}^{1} \in \{0,1,\dots,65535\}$ may be configured by using higher layer

signaling. $N_{\text{ID}}^{\bar{n}_{\text{SCID}}^{\bar{\lambda}}}$ is related to a cell ID (identification), and may be generally equal to the cell ID, where

$$N_{\text{ID}}^{\bar{n}_{\text{SCID}}^{\bar{\lambda}}} = N_{\text{ID}}^{\text{cell}}$$ . $\lambda$ represents a code division multiplexing (code division multiplexing, CDM) group (group) index corresponding to the DMRS port.

Currently, an NR protocol supports two DMRS resource mapping types. A type 1 (eType 1) DMRS may support a maximum of 16 orthogonal ports. A type 2 (eType 2) DMRS may support a maximum of 24 orthogonal ports. For one DMRS port, to perform channel estimation on different time-frequency resources and ensure channel estimation quality, a plurality of DMRS symbols need to be sent on a plurality of time-frequency resources. The DMRS may occupy at least one OFDM symbol in time domain, and occupy a bandwidth the same as a scheduled bandwidth of a scheduled data signal in frequency domain.

A DMRS sequence corresponding to one DMRS port may be mapped to a corresponding time-frequency resource according to the preset time-frequency resource mapping rule. An $m^{\text{th}}$ sequence element $r(m)$ in a DMRS sequence corresponding to an antenna port p (corresponding to a DMRS port p) may be mapped, according to a mapping rule shown in Formula (6), to an RE whose index is $(k, l)_{p,\mu}$:

$$\alpha_{k,l}^{(p,\mu)} = \beta_{\text{PDSCH}}^{\text{DMRS}} w_{\text{f}}(2 \cdot (n \bmod 2) + k') w_{\text{t}}(l') r(2n + k');$$

$$k = \begin{cases} 4n + 2k' + \Delta, \text{eType 1} \\ 6n + k' + \Delta, \text{eType 2} \end{cases};$$

$$k' = 0,1;$$

$$l = \bar{l} + l';$$

$$n = 0,1...;$$

$$l' = 0,1; \tag{6}$$

The RE whose index is $(k, l)_{p,\mu}$ corresponds to an OFDM symbol whose index is $l$ in a slot in time domain, and corresponds to a subcarrier whose index is k in frequency domain. $\alpha_{k,l}^{(p,\mu)}$ is a DMRS modulated symbol corresponding to the DMRS port p mapped to the RE whose index is $(k, l)_{p,\mu}$. $\Delta$ is a subcarrier offset factor. $\mu$ is a subcarrier spacing. $\bar{l}$ is an index of a start OFDM symbol occupied by the DMRS modulated symbol or an index of a reference OFDM symbol. $\beta_{PDSCH}^{DMRS}$ is a power scaling factor. $w_{\text{f}}(k')$ is a frequency domain cover code element corresponding to a subcarrier whose index is $k'$. $w_t(l')$ is a time domain cover code element corresponding to an OFDM symbol whose index is $l'$.

In a mapping rule of a configuration type 1 (an eType 1 DMRS), values of $w_f(k')$, $w_t(l')$, and $\Delta$ corresponding to the DMRS port p may be determined according to Table 1.

Table 1

| p | $\lambda$ | $\Delta$ | $w_{\text{f}}(f)$ | | | | $w_{\text{t}}(l')$ | |
|---|---|---|---|---|---|---|---|---|
| | | | $f = 0$ | $f = 1$ | $f = 2$ | $f = 3$ | $l' = 0$ | $l' = 1$ |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 1 | +1 | +1 | +1 | +1 | +1 | +1 |
| 1003 | 1 | 1 | +1 | -1 | +1 | -1 | +1 | +1 |
| 1004 | 0 | 0 | +1 | +1 | +1 | +1 | +1 | -1 |
| 1005 | 0 | 0 | +1 | -1 | +1 | -1 | +1 | -1 |
| 1006 | 1 | 1 | +1 | +1 | +1 | +1 | +1 | -1 |
| 1007 | 1 | 1 | +1 | -1 | +1 | -1 | +1 | -1 |

(continued)

| p | $\lambda$ | $\Delta$ | $w_f(f)$ | | | | $w_t(l')$ | |
|---|---|---|---|---|---|---|---|---|
| | | | f = 0 | f = 1 | f = 2 | f = 3 | l' = 0 | l' = 1 |
| 1008 | 0 | 0 | +1 | +1 | -1 | -1 | +1 | +1 |
| 1009 | 0 | 0 | +1 | -1 | -1 | +1 | +1 | +1 |
| 1010 | 1 | 1 | +1 | +1 | -1 | -1 | +1 | +1 |
| 1011 | 1 | 1 | +1 | -1 | -1 | +1 | +1 | +1 |
| 1012 | 0 | 0 | +1 | +1 | -1 | -1 | +1 | -1 |
| 1013 | 0 | 0 | +1 | -1 | -1 | +1 | +1 | -1 |
| 1014 | 1 | 1 | +1 | +1 | -1 | -1 | +1 | -1 |
| 1015 | 1 | 1 | +1 | -1 | -1 | +1 | +1 | -1 |

In a mapping rule of a configuration type 2 (an eType 2 DMRS), values of $w_f(k')$, $w_t(l')$, and $\Delta$ corresponding to the DMRS port p may be determined according to Table 2.

Table 2

| p | $\lambda$ | $\Delta$ | $w_f(f)$ | | | | $w_t(l')$ | |
|---|---|---|---|---|---|---|---|---|
| | | | f = 0 | f = 1 | f = 2 | f = 3 | l' = 0 | l' = 1 |
| 1000 | 0 | 0 | +1 | +1 | +1 | +1 | +1 | +1 |
| 1001 | 0 | 0 | +1 | -1 | +1 | -1 | +1 | +1 |
| 1002 | 1 | 2 | +1 | +1 | +1 | +1 | +1 | +1 |
| 1003 | 1 | 2 | +1 | -1 | +1 | -1 | +1 | +1 |
| 1004 | 2 | 4 | +1 | +1 | +1 | +1 | +1 | +1 |
| 1005 | 2 | 4 | +1 | -1 | +1 | -1 | +1 | +1 |
| 1006 | 0 | 0 | +1 | +1 | +1 | +1 | +1 | -1 |
| 1007 | 0 | 0 | +1 | -1 | +1 | -1 | +1 | -1 |
| 1008 | 1 | 2 | +1 | +1 | +1 | +1 | +1 | -1 |
| 1009 | 1 | 2 | +1 | -1 | +1 | -1 | +1 | -1 |
| 1010 | 2 | 4 | +1 | +1 | +1 | +1 | +1 | -1 |
| 1011 | 2 | 4 | +1 | -1 | +1 | -1 | +1 | -1 |
| 1012 | 0 | 0 | +1 | +1 | -1 | -1 | +1 | +1 |
| 1013 | 0 | 0 | +1 | -1 | -1 | +1 | +1 | +1 |
| 1014 | 1 | 2 | +1 | +1 | -1 | -1 | +1 | +1 |
| 1015 | 1 | 2 | +1 | -1 | -1 | +1 | +1 | +1 |
| 1016 | 2 | 4 | +1 | +1 | -1 | -1 | +1 | +1 |
| 1017 | 2 | 4 | +1 | -1 | -1 | +1 | +1 | +1 |
| 1018 | 0 | 0 | +1 | +1 | -1 | -1 | +1 | -1 |
| 1019 | 0 | 0 | +1 | -1 | -1 | +1 | +1 | -1 |
| 1020 | 1 | 2 | +1 | +1 | -1 | -1 | +1 | -1 |
| 1021 | 1 | 2 | +1 | -1 | -1 | +1 | +1 | -1 |
| 1022 | 2 | 4 | +1 | +1 | -1 | -1 | +1 | -1 |
| 1023 | 2 | 4 | +1 | -1 | -1 | +1 | +1 | -1 |

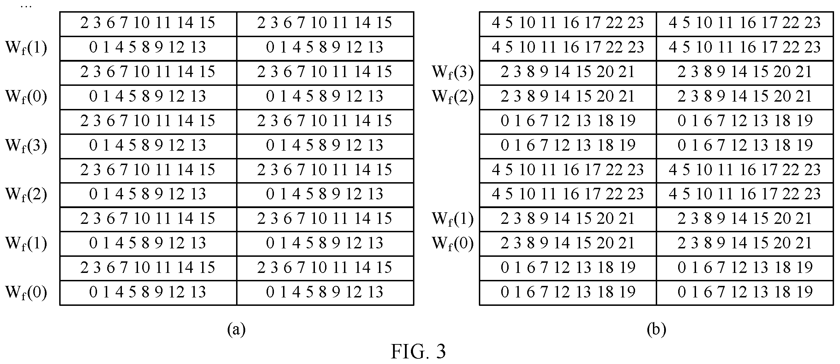

$\lambda$ is an index of an orthogonal multiplexing (CDM) group to which the port p belongs. DMRS ports in a same CDM group occupy a same time-frequency resource. According to Formula (6), for the configuration type 1 (the eType 1 DMRS), the time-frequency resource mapping manner is shown in (a) in FIG. 3, a maximum of 16 ports are supported, and one DMRS resource occupies one OFDM symbol. The 16 DMRS ports are grouped into two code division multiplexing groups (CDM groups), where a CDM group 0 includes ports 0, 1, 4, 5, 8, 9, 12, and 13, and a CDM group 1 includes ports 2, 3, 6, 7, 10, 11, 14, and 15. The CDM group 0 and the CDM group 1 are frequency division multiplexed (mapped to different frequency domain resources). DMRS ports included in a CMD group are mapped to a same time-frequency resource. Reference signals corresponding to the DMRS ports included in the CMD group are distinguished by using orthogonal cover codes (Orthogonal Cover Codes, OCCs), to ensure orthogonality between the DMRS ports in the CDM group. This suppresses interference between DMRSs transmitted on different antenna ports.

For example, for the CDM group 0, the DMRS ports 0, 1, 4, 5, 8, 9, 12, and 13 are located in a same resource element RE, and are mapped to frequency domain resources in a comb manner (adjacent occupied frequency domain resources are separated by one subcarrier). For one DMRS port, four adjacent occupied REs correspond to one frequency domain OCC codeword sequence whose length is 4. For example, for a subcarrier 0 and a subcarrier 2, a group of frequency domain OCC codeword sequences (+1+1+1+1/+1-1+1-1/+1+1-1-1/+1-1-1+1) whose lengths are 2 are used for the port 0, the port 1, the port 8, and the port 9. A same frequency domain OCC codeword is used for the port 0 and the port 4, and orthogonality between the two ports is guaranteed by using time domain OCCs. For a 1st symbol and a 2nd symbol, the port 0 and the port 4 respectively correspond to time domain OCC sequences (+1+1 and +1-1). Specifically, orthogonality of a port group 0/1/8/9 is guaranteed by using FD-OCCs whose lengths are 4, and corresponding FD-OCC sequences are ($w_f(0)$, $w_f(1)$, $w_f(2)$, $w_f(3)$) ((+1+1+1+11+1-1+1-1/+1+1-1-1/+1-1-1+1). If the FD-OCC sequence whose length is 4 is split into two FD-OCC subsequences ($w_f(0)$, $w_f(1)$) or ($w_f(2)$, $w_f(3)$)) whose lengths are 2, it can be learned that the FD-OCC subsequences of the port 0 and the port 1 whose lengths are 2 are still orthogonal, and the FD-OCC subsequences of the port 0 and the port 9 whose lengths are 2 are still orthogonal, but a correlation between the FD-OCC subsequences of the port 0 and the port 8 whose lengths are 2 is 1. This means that for the ports 0 and 1 or the ports 0 and 8, orthogonality can be guaranteed as long as a channel remains unchanged in the two subcarriers to which the FD-OCCs whose lengths are 2 are mapped, and for the ports 0 and 9, orthogonality can be guaranteed only when the channel remains unchanged in the four subcarriers to which the FD-OCCs whose lengths are 4 are mapped. Therefore, in a case of large channel frequency selectivity, interference levels and channel estimation capabilities of ports in different port combinations are different.

For the configuration type 2 (the eType 2 DMRS), the time-frequency resource mapping manner is shown in (b) in FIG. 3, and a maximum of 24 ports are supported. The 24 DMRS ports are grouped into three code division multiplexing groups (CDM groups), where a CDM group 0 includes ports 0, 1, 6, 7, 12, 13, 18, and 19, a CDM group 1 includes ports 2, 3, 8, 9, 14, 15, 20, and 21, and a CDM group 2 includes ports 4, 5, 10, 11, 16, 17, 22, and 23. The eight DMRS ports in each CDM group are multiplexed on a same time-frequency resource by using frequency domain OCCs and time domain OCCs. The frequency domain OCCs, the time domain OCCs, and a time-frequency resource mapping principle that correspond to the ports in each CDM group are the same as those of the eType 1 DMRS, and details are not described herein again.

(4) Codeword-to-layer mapping

A MIMO system may provide a spatial multiplexing capability via a plurality of antennas, to simultaneously transmit a plurality of data streams, where the plurality of data streams are also referred to as spatial layers. During MIMO signal processing, a modulated symbol sequence is mapped or allocated to different spatial layers for transmission according to a preset rule through codeword-to-layer mapping (CW-to-layer mapping).

According to an NR protocol, a maximum of two encoding codewords are supported. If a quantity (rank) of data streams corresponding to one terminal device is less than or equal to 4, one codeword is used for encoding; or if a quantity (rank) of data streams corresponding to one terminal device is greater than 4, two codewords are used for encoding.

A modulated symbol sequence $d^{(q)}(0), \ldots, d^{(q)}(M_{\text{symb}}^{(q)} - 1)$ obtained through encoding and modulation is mapped to v spatial layers according to a rule in the following table, to form a plurality of symbol sequences $x(i) = [x^{(0)}(i) \ldots x^{(v-1)}(i)]^T$, $i = 0, 1, \ldots, M_{\text{symb}}^{\text{layer}} - 1$, where $M_{\text{symb}}^{(q)}$ represents a length of a modulated symbol sequence corresponding to the codeword, and $M_{\text{symb}}^{\text{layer}}$ represents a length of a mapped symbol sequence corresponding to each of the $\upsilon$ spatial layer.

Table 3

| Quantity of spatial layers | Quantity of codewords | Codeword-to-layer mapping $i = 0,1,\ldots,M_{\text{symb}}^{\text{layer}} - 1$ |
|---|---|---|
| 1 | 1 | $x^{(0)}(i) = d^{(0)}(i),\quad M_{\text{symb}}^{\text{layer}} = M_{\text{symb}}^{(0)}$ |
| 2 | 1 | $x^{(0)}(i) = d^{(0)}(2i)\quad M_{\text{symb}}^{\text{layer}} = M_{\text{symb}}^{(0)}/2\quad x^{(1)}(i) = d^{(0)}(2i + 1),$ |
| 3 | 1 | $x^{(0)}(i) = d^{(0)}(3i)$ <br> $x^{(1)}(i) = d^{(0)}(3i + 1),\quad M_{\text{symb}}^{\text{layer}} = M_{\text{symb}}^{(0)}/3$ <br> $x^{(2)}(i) = d^{(0)}(3i + 2)$ |
| 4 | 1 | $x^{(0)}(i) = d^{(0)}(4i)$ <br> $x^{(1)}(i) = d^{(0)}(4i+1)$ <br> $x^{(2)}(i) = d^{(0)}(4i+2),\quad M_{\text{symb}}^{\text{layer}} = M_{\text{symb}}^{(0)}/4$ <br> $x^{(3)}(i) = d^{(0)}(4i + 3)$ |
| 5 | 2 | $x^{(0)}(i) = d^{(0)}(2i)$ <br> $x^{(1)}(i) = d^{(0)}(2i + 1)$ <br> $x^{(2)}(i) = d^{(1)}(3i)$ <br> $x^{(3)}(i) = d^{(1)}(3i + 1),\quad M_{\text{symb}}^{\text{layer}} = M_{\text{symb}}^{(0)}/2 = M_{\text{symb}}^{(1)}/3$ <br> $x^{(4)}(i) = d^{(1)}(3i + 2)$ |
| 6 | 2 | $x^{(0)}(i) = d^{(0)}(3i)$ <br> $x^{(1)}(i) = d^{(0)}(3i + 1)$ <br> $x^{(2)}(i) = d^{(0)}(3i + 2)$ <br> $x^{(3)}(i) = d^{(1)}(3i)$ <br> $x^{(4)}(i) = d^{(1)}(3i + 1),\quad M_{\text{symb}}^{\text{layer}} = M_{\text{symb}}^{(0)}/3 = M_{\text{symb}}^{(1)}/3$ <br> $x^{(5)}(i) = d^{(1)}(3i + 2)$ |
| 7 | 2 | $x^{(0)}(i) = d^{(0)}(3i)$ <br> $x^{(1)}(i) = d^{(0)}(3i + 1)$ <br> $x^{(2)}(i) = d^{(0)}(3i + 2)$ <br> $x^{(3)}(i) = d^{(1)}(4i)$ <br> $x^{(4)}(i) = d^{(1)}(4i + 1)$ <br> $x^{(5)}(i) = d^{(1)}(4i + 2)$ <br> $x^{(6)}(i) = d^{(1)}(4i + 3)\quad M_{\text{symb}}^{\text{layer}} = M_{\text{symb}}^{(0)}/3 = M_{\text{symb}}^{(1)}/4$ |
| 8 | 2 | $x^{(0)}(i) = d^{(0)}(4i)$ <br> $x^{(1)}(i) = d^{(0)}(4i + 1)$ <br> $x^{(2)}(i) = d^{(0)}(4i + 2)$ <br> $x^{(3)}(i) = d^{(0)}(4i + 3)$ <br> $x^{(4)}(i) = d^{(1)}(4i)$ <br> $x^{(5)}(i) = d^{(1)}(4i + 1)$ <br> $x^{(6)}(i) = d^{(1)}(4i + 2)$ <br> $x^{(7)}(i) = d^{(1)}(4i + 3)\quad M_{\text{symb}}^{\text{layer}} = M_{\text{symb}}^{(0)}/4 = M_{\text{symb}}^{(1)}/4$ |

It can be learned from Table 3 that in a scenario of two codewords, each codeword is mapped to approximately half of spatial layers. A modulated symbol sequence $d^{(q)}(0), \ldots, d^{(q)}(M_{\text{symb}}^{(q)} - 1)$ corresponding to one codeword is sequentially mapped to a plurality of corresponding spatial layers in a polling manner.

(5) OCC

The orthogonal cover code is used to ensure orthogonality between ports for reference signals multiplexed in a same time-frequency resource. Based on a dimension of OCC mapping, the OCC may be classified into two types: a frequency domain OCC (denoted as FD-OCC) and a time domain OCC (denoted as TD-OCC). Correspondingly, an OCC length may also be classified into two types: an FD-OCC length and a TD-OCC length.

(6) Time domain unit and frequency domain unit

Data or information may be carried on a time-frequency resource.
In time domain, a time domain resource may include one or more time domain units (which may also be referred to as time units).
In embodiments of this application, one time unit may include several time domain resources. The time domain unit is, for example, a radio frame (radio frame, RF), and the time domain resource included in the time domain unit is, for example, a subframe (subframe), a frame, a half-subframe, or a half-frame, a slot (slot), a mini-slot (mini-slot), a partial slot (partial slot), or an OFDM symbol (symbol). Alternatively, the time domain unit may be a set of one or more time domain resources. For example, the time domain unit is one or more OFDM symbols in one slot. For example, a quantity of the one or more OFDM symbols is 6, 7, 12, or 14. The one or more time units may be consecutive or discrete in terms of time.
In addition, duration of the slot may be related to a subcarrier spacing (subcarrier spacing, SCS). For example, when the subcarrier spacing is 15 kHz, duration of one slot is 1 millisecond (ms); when the subcarrier spacing is 30 kHz, duration of one slot is 0.5 ms; or when the subcarrier spacing is 60 kHz, duration of one slot is 0.25 ms. Similarly, it may be deduced that when the subcarrier spacing is 15*2u kHz, duration of one slot is 2-u ms, where u(0, 1, 2, ....
In frequency domain, a frequency domain resource may include one or more frequency domain units. A frequency domain unit may be a resource element (resource element, RE), a resource block (resource block, RB), a subchannel, a resource pool (resource pool), a bandwidth (bandwidth), a bandwidth part (bandwidth part, BWP), a carrier (carrier, CC), a channel (channel), an interlace (interlace) RB, or the like.

(7) Correlation coefficient

For example, a correlation coefficient between a sequence A = $(a_1, a_2, \ldots, a_N)$ whose length is $N$ and a sequence B = $(b_1, b_2, \ldots, b_N)$ whose length is $N$ may be represented as:

$$\rho = \frac{A \cdot B^H}{|A||B|} \qquad (7)$$

$(\cdot)^H$ represents a conjugate transpose of a vector or a matrix. $|A|$ represents a modulus of the vector or the matrix. If the sequence A and the sequence B are orthogonal, it indicates that the correlation coefficient between the sequence A and the sequence B is 0; or if the sequence A and the sequence B are not orthogonal, it indicates that the correlation coefficient between the sequence A and the sequence B is not 0. The correlation coefficient between the sequence A and the sequence B may also be referred to as a cross-correlation coefficient.
The foregoing briefly describes terms used in this application. Details are not described in the following embodiments. In addition, the foregoing descriptions of the terms are merely descriptions for ease of understanding, and do not limit the protection scope of embodiments of this application.
Due to a special structure of a low-complexity 6R receiver, data streams detected by two sub-receivers include partially overlapping data streams. To perform channel detection and estimation more effectively, the 6R receiver needs to know information about a data stream on which merging can be performed, to perform merging and detection at a receive end. Considering that index information of the data stream on which merging can be performed is related to a precoding design of a transmit end, but the transmit end does not notify the receive end that a special precoding design is used, the receive end cannot determine which data streams need to be merged. This not only reduces detection efficiency, but also may cause an incorrect data stream detection result, causing a greater performance loss. Therefore, how to reduce detection complexity of a receiver and improve detection performance is a problem that needs to be considered currently.
In view of this, this application provides a communication method and apparatus. Different quantities of different data streams and corresponding indexes of first-type data streams are indicated to a first communication apparatus, so that the first communication apparatus knows mergeable data streams, facilitating processing of first-type data, ensuring data stream detection performance, and reducing detection complexity of a receiver.

For ease of understanding of embodiments of this application, the following descriptions are provided.

(1) In this application, unless otherwise stated or if there is a logic conflict, terms and/or descriptions in different embodiments are consistent and may be mutually referenced, and technical features in different embodiments may be combined into a new embodiment based on an internal logical relationship thereof.

(2) In this application, "at least one" means one or more, and "a plurality of" means two or more. "And/or" describes an association relationship between associated objects, and indicates that three relationships may exist. For example, A and/or B may indicate the following three cases: Only A exists, both A and B exist, and only B exists, where A and B may be singular or plural. In text descriptions of this application, the character "/" generally indicates an "or" relationship between the associated objects. "At least one of the following items (pieces)" or a similar expression thereof means any combination of these items, including a singular item (piece) or any combination of plural items (pieces). For example, at least one of a, b, and c may indicate a, b, c, a and b, a and c, b and c, or a, b, and c, where each of a, b, and c may be singular or plural.

(3) In this application, "first", "second", and various numbers are merely for differentiation for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.

(4) In this application, the terms "include" and "have" and any other variants thereof are intended to cover a non-exclusive inclusion. For example, a process, method, system, product, or device that includes a list of steps or units is not necessarily limited to those expressly listed steps or units, but may include other steps or units that are not expressly listed or inherent to the process, method, product, or device.

(5) In this application, "indicate" may include "directly indicate" and "indirectly indicate". When a piece of indication information indicates A, the indication information may directly indicate A or indirectly indicate A, but this does not mean that the indication information necessarily carries A.

(6) In this application, a "protocol" in this application may be a standard protocol in the communication field, for example, may include a 5G protocol, a new radio (new radio, NR) protocol, and a related protocol applied to a future communication system. This is not limited in this application. "Predefinition" may include definition in advance, for example, definition in the protocol. "Pre-configuration" may be implemented by pre-storing corresponding code or a corresponding table in a device, or may be implemented in another manner that may indicate related information. A specific implementation thereof is not limited in this application.

(7) In this application, configuration may be signaling configuration, or may be described as configuration signaling. For example, signaling configuration includes configuring by using signaling sent by a base station, where the signaling may be a radio resource control (radio resource control, RRC) message, downlink control information (downlink control information, DCI), or a system information block (system information block, SIB). Optionally, signaling configuration may alternatively be configuring for a terminal device by using preconfigured signaling, or may be configuring for a terminal device in a preconfiguration manner. Preconfiguration herein is to define or configure a value of a corresponding parameter in advance in a protocol manner, and store the value in the terminal device during communication with the terminal device. A preconfigured message may be modified or updated when the terminal device is connected to a network.

(8) In this application, "communication" may be described as "data transmission", "information transmission", "data processing", or the like, and "transmission" includes "sending" and "receiving".

(9) In this application, an index of a DMRS port or an index of a data stream may start from 0 or 1, or start from another number. This is not limited in this application.

(10) The technical solutions of this application may be applied to a DMRS. It may be understood that with development of communication technologies, a new signal with a same function as the DMRS may be defined in a future communication system, which is also applicable to this application. For ease of understanding and description, an example in which a reference signal is a DMRS is used to describe the technical solutions in embodiments of this application. This should not constitute any limitation on this application. The reference signal in this application may be any reference signal that can be used for channel estimation, for example, a channel sounding reference signal (Sounding Reference Signal, SRS), or another reference signal that can be used to implement a same or similar function. In a communication system that may appear in the future, the reference signal may have a different name. However, provided that the reference signal is essentially the same as the DMRS, the technical solutions of this application are applicable.

With reference to the accompanying drawings, the following describes in detail the communication method provided in embodiments of this application. Embodiments provided in this application are applicable to any communication scenario in which a transmit-end device communicates with a receive-end device, for example, may be applied to the communication system shown in FIG. 1.

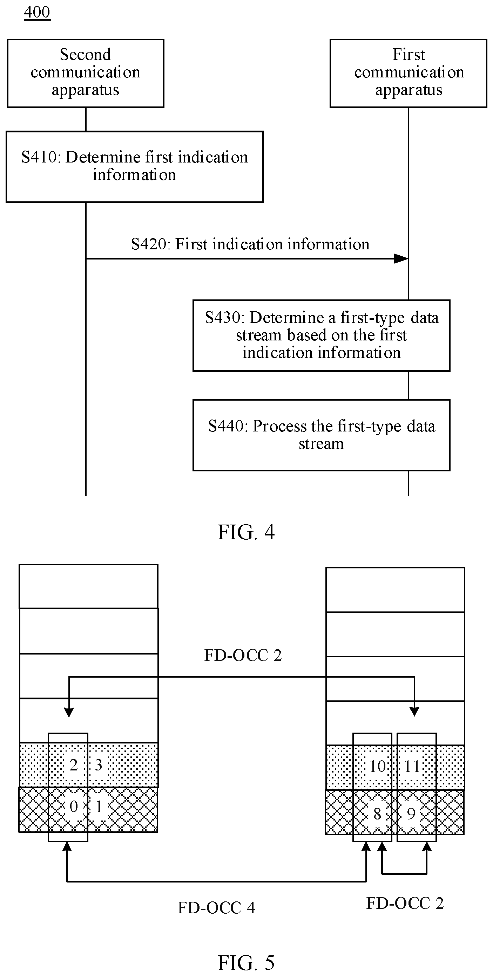

FIG. 4 is a schematic flowchart of a communication method 400 according to an embodiment of this application. As shown in FIG. 4, the method may be performed by a first communication apparatus and a second communication apparatus. The method includes the following plurality of steps. For details, refer to an existing protocol.

S410: The second communication apparatus determines first indication information.

The first indication information indicates a quantity R of data streams and an index of a first-type data stream, the first-type data stream is a same data stream included in a first data stream subset and a second data stream subset, and R is an integer greater than or equal to 2.

It should be understood that R represents a transmission rank, and the quantity R of data streams may represent a quantity of transmitted data streams or a quantity of spatial layers (layers). In embodiments of this application, unless otherwise specified, the "data stream" and the "spatial layer" may be used interchangeably. In addition, the data stream may also be referred to as a stream or a layer.

In embodiments of this application, the "first-type data stream" may be understood as a data stream included in the two data stream subsets, a data stream existing in the two data stream subsets, or a same part of data streams included in the two data stream subsets. In other words, merging can be performed on the "first-type data stream" for the first communication apparatus. Therefore, the "first-type data stream" may alternatively be a "mergeable data stream". Correspondingly, in embodiments of this application, a data stream in the two data stream subsets other than the "first-type data stream" is collectively referred to as a "second-type data stream". Therefore, the "second-type data stream" may alternatively be a "non-mergeable data stream". This is not limited in this application.

It should be noted that "mergeable" or "merging can be performed" may be understood as follows: A signal received by a terminal receive antenna associated with a first antenna port group corresponding to the first communication apparatus is used to detect information corresponding to the first-type data stream. Similarly, a signal received by a terminal receive antenna associated with a second antenna port group corresponding to the first communication apparatus is also used to detect the information corresponding to the first-type data stream. On a receive side, the first communication apparatus may merge estimation results of the information about the first-type data stream that are obtained through detection based on the signal received by the terminal receive antenna associated with the first antenna port group and the signal received by the terminal receive antenna associated with the second antenna port group.

It should be understood that the first data stream subset and the second data stream subset belong to a first data stream set. If the quantity R of data streams included in the first data stream set is 6, which are a data stream 1, a data stream 2, a data stream 3, a data stream 4, a data stream 5, and a data stream 6, the first data stream subset includes the data stream 1, the data stream 2, the data stream 3, and the data stream 4, and the second data stream subset includes the data stream 3, the data stream 4, the data stream 5, and the data stream 6, the same data stream included in the first data stream subset and the second data stream subset is the data stream 3 and the data stream 4. In this case, the first-type data stream is the data stream 3 and the data stream 4, and correspondingly, the second-type data stream is the data stream 1, the data stream 2, the data stream 5, and the data stream 6.

Optionally, a specific implementation in which the second communication apparatus determines the first indication information is not limited in this application. For example, the first communication apparatus may report a receiving capability to the second communication apparatus. Correspondingly, the second communication apparatus may flexibly adjust, as required, the data stream on which merging can be performed, and indicate the data stream to the first communication apparatus, so that the first communication apparatus learns of an accurate mergeable data stream and performs processing, ensuring data stream detection performance.

S420: The second communication apparatus sends the first indication information to the first communication apparatus. Correspondingly, the first communication apparatus receives the first indication information from the second communication apparatus.

For example, the first communication apparatus may be a terminal device, or may be a chip (or a chip system) or a circuit of a terminal device, and the second communication apparatus may be a network device, or may be a chip (or a chip system) or a circuit of a network device. This is not limited in this application.

Optionally, the first communication apparatus corresponds to the first antenna port group and the second antenna port group. The first antenna port group includes a first antenna port, and the first antenna port is configured to detect the first data stream subset in the first data stream set including the R data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream.

In other words, when the first communication apparatus is the terminal device, the first antenna port group and the second antenna port group in this implementation are antenna port groups corresponding to the terminal device, and the first antenna port group and the second antenna port group respectively correspond to a sub-receiver 1 and a sub-receiver 2 of the terminal device. In other words, the sub-receiver 1 includes an antenna port corresponding to the first antenna port group, and the sub-receiver 2 includes an antenna port corresponding to the second antenna port group. The first antenna port group and the second antenna port group may be considered as the sub-receiver 1 and the sub-receiver 2 of the terminal device, and each sub-receiver detects a part of data streams in the R transmitted data streams, effectively reducing detection complexity of the terminal device. The antenna port group corresponding to the terminal device may be a receive antenna corresponding to the terminal device. It should be understood that the first antenna port group may be mapped to a first SRS port group, and the second antenna port group may be mapped to a second SRS port group. To be specific, a first SRS port in the first SRS port group corresponds to the first antenna port in the first antenna port group, and a second SRS port in the second SRS port group corresponds to the second antenna port in the second antenna port group.

Optionally, the first antenna port group and the second antenna port group may alternatively be considered as a terminal antenna port group corresponding to a first SRS port group and a terminal antenna port group corresponding to a second SRS port group. In this case, the first antenna port is a terminal antenna port corresponding to a first SRS port, and the second antenna port is a terminal antenna port corresponding to a second SRS port. In other words, an "x$^{th}$ antenna port group" or an "x$^{th}$ antenna port" in embodiments of this application may alternatively be a "terminal antenna port group corresponding to an x$^{th}$ SRS port group" or a "terminal antenna port corresponding to an x$^{th}$ SRS port".

Optionally, the first antenna port group and the second antenna port group may alternatively be considered as a first SRS port group and a second SRS port group. In this case, the first antenna port is a first SRS port, the second antenna port is a second SRS port, and the first antenna port and the second antenna port correspond to antenna ports of the terminal device.

It should be understood that, that the first antenna port is configured to detect the first data stream subset in the first data stream set including the R data streams may be understood as that a signal received by an antenna port of the terminal device corresponding to the first antenna port is used to detect the first data stream subset in the first data stream set including the R data streams. Similarly, that the second antenna port is configured to detect the second data stream subset in the first data stream set may be understood as that a signal received by an antenna port of the terminal device corresponding to the second antenna port is used to detect the second data stream subset in the second data stream set including the R data streams.

It should be noted that in embodiments of this application, that "an apparatus A sends information C to an apparatus B" may be understood as that a destination end of the information C or an intermediate apparatus in a transmission path between the apparatus A and a destination end is the apparatus B, and may include directly or indirectly sending the information to the apparatus B. That "the apparatus B receives the information C from the apparatus A" may be understood as that a source end of the information C or an intermediate apparatus in a transmission path between the apparatus B and a source end is the apparatus A, and may include directly or indirectly receiving the information from the apparatus A. The information may undergo necessary processing, for example, a format change, between the source end and the destination end for sending of the information. However, the destination end may understand valid information from the source end. A similar expression in this application may be understood similarly, and details are not described. Therefore, a specific implementation in which the second communication apparatus sends the first indication information to the first communication apparatus is not limited in this application. For example, the second communication apparatus may directly send the first indication information to the first communication apparatus, or the second communication apparatus may send the first indication information to the first communication apparatus through forwarding via another device or apparatus. This is not limited in this application.

S430: The first communication apparatus determines the first-type data stream based on the first indication information.

S440: The first communication apparatus processes the first-type data stream.

That the first communication apparatus processes the first-type data stream includes but is not limited to: performing linear MIMO detection or non-linear MIMO detection on the first-type data stream. An example in which a total quantity R of transmitted data streams is 6 is used. The first antenna port group corresponding to the first communication apparatus correspondingly detects data streams 1, 2, 3, and 4, the second antenna port group corresponding to the first communication apparatus correspondingly detects data streams 3, 4, 5, and 6, and each antenna port group detects signals of a maximum of four data streams. It can be learned that the data streams detected by the two antenna port groups include partially overlapping data streams, that is, the first-type data stream is the data streams 3 and 4. Therefore, after a detected signal corresponding to each data stream is demodulated, the overlapping data streams included in the two antenna port groups are merged. Subsequently, codeword-to-layer demapping is performed on detected signals corresponding to the two merged data streams. Because R>4, detected signals corresponding to the six data streams are demapped into two codewords, and then channel decoding is separately performed on the two codewords to obtain an estimation result of a signal sent by the second communication apparatus.

The following describes a specific implementation of how to indicate or determine the first-type data stream.

Manner 1

For example, different values of the quantity of data streams correspond to different data stream index combination sets. The data stream index combination set includes one data stream index combination or a plurality of data stream index combinations, and each of the plurality of data stream index combinations includes at least two candidate first-type data stream indexes. The index of the first-type data stream belongs to the candidate first-type data stream indexes.

Optionally, the data stream index combination set may be predefined, for example, defined in a protocol. Alternatively, the data stream index combination set may be configured or preconfigured. "Pre-configuration" may be implemented by pre-storing corresponding code or a corresponding table in a device, or may be implemented in another manner that may indicate related information. A specific implementation thereof is not limited in this application. For example, the protocol may define a table of candidate first-type data stream index combinations corresponding to different quantities of data streams (or quantities of spatial layers), as shown in Table 4 or Table 5.

As shown in Table 4, when the quantity R of data streams is 5, there are four candidate first-type data stream index combinations. When the quantity R of data streams is 6, there are also four candidate first-type data stream index combinations. It is assumed that the first indication information may be 2-bit, that is, "00", "01", "10", and "11" correspondingly indicating indexes 0 to 3, and indicates a first-type data stream index combination. For example, if the first indication information sent by the second communication apparatus is "01", and indicates R(5 and the index 1, the first communication apparatus may determine, based on the first indication information, that the index of the first-type data stream is 1, 2, and 3. In this way, it may be determined that the first-type data stream includes the data stream 1, the data stream 2, and the data stream 3. Then, the first-type data streams may be merged and detected. For another example, if the first indication information sent by the second communication apparatus is "11", and indicates R(6 and the index 3, the first communication apparatus may determine, based on the first indication information, that the index of the first-type data stream is 4 and 5. In this way, it may be determined that the first-type data stream includes the stream 4 and the stream 5. Then, the first-type data streams may be merged and detected.

Table 4

| Index | Quantity of data streams R(5 | Quantity of data streams R(6 |
|-------|------------------------------|------------------------------|
| 0 | 0 1 2 | 0 1 |
| 1 | 1 2 3 | 1 2 |
| 2 | 2 3 4 | 3 4 |
| 3 | 0 3 4 | 4 5 |

As shown in Table 5, when the quantity R of data streams is 5, there are 10 candidate first-type data stream index combinations. When the quantity R of data streams is 6, there are 14 candidate first-type data stream index combinations. It is assumed that the first indication information may be 4-bit, that is, "0000", "0001", ..., "1101", and "1110" correspondingly indicating indexes 0 to 14, and indicates a first-type data stream index combination. For example, if the first indication information sent by the second communication apparatus is "0010", and indicates R(5 and the index 2, the first communication apparatus may determine, based on the first indication information, that the index of the first-type data stream is 0, 1, and 4. In this way, it may be determined that the first-type data stream includes the data stream 0, the data stream 1, and the data stream 4. Then, the first-type data streams may be merged and detected. For another example, if the first indication information sent by the second communication apparatus is "1011", and indicates R(6 and the index 11, the first communication apparatus may determine, based on the first indication information, that the index of the first-type data stream is 2 and 5. In this way, it may be determined that the first-type data stream includes the data stream 2 and the data stream 5. Then, the first-type data streams may be merged and detected.

Table 5

| Index | Quantity of data streams R(5 | Quantity of data streams R(6 |
|-------|------------------------------|------------------------------|
| 0 | 0 1 2 | 0 1 |
| 1 | 0 1 3 | 0 2 |
| 2 | 0 1 4 | 0 3 |
| 3 | 0 2 3 | 0 4 |
| 4 | 0 2 4 | 0 5 |

(continued)

| Index | Quantity of data streams R(5 | Quantity of data streams R(6 |
|---|---|---|
| 5 | 0 3 4 | 1 2 |
| 6 | 1 2 3 | 1 3 |
| 7 | 1 2 4 | 1 4 |
| 8 | 1 3 4 | 1 5 |
| 9 | 2 3 4 | 2 3 |
| 10 |  | 2 4 |
| 11 |  | 2 5 |
| 12 |  | 3 4 |
| 13 |  | 3 5 |
| 14 |  | 4 5 |

It should be understood that Table 4 and Table 5 are merely examples provided for ease of understanding, and do not constitute a limitation on the technical solutions of this application. A value of the quantity R of data streams and a value of the index of the first-type data stream are not specifically limited in this embodiment of this application. Optionally, the foregoing example of using the table to describe the first-type data stream index combination is merely an implementation. The first-type data stream index combination may alternatively exist in a form of a function, a text, or a character string. This is not limited in this application.

According to the foregoing solution, because the data stream on which merging can be performed has better detection performance, the second communication apparatus explicitly indicates index information of the data stream on which merging can be performed, that is, the index of the first-type data stream, to the first communication apparatus by sending the first indication information. Therefore, the second communication apparatus can flexibly perform precoding processing as required and flexibly adjust the data stream on which merging can be performed, and accurately notify the first communication apparatus to ensure that the first communication apparatus can better merge and detect the data streams, improving detection performance. In addition, different quantities of data streams may correspond to different candidate first-type data stream index combination tables, so that indication overheads can be effectively reduced.

Manner 2

Considering that orthogonality guarantee capabilities of different DMRS ports are different, that is, channel estimation capabilities of different DMRS ports are different, how to match a difference between the channel estimation capabilities of the DMRS ports with a performance difference between different data streams corresponding to a low-complexity 6R receiver to obtain optimal performance is a problem that needs to be resolved.

Optionally, the method 400 may further include the following step.

S401: The second communication apparatus sends second indication information to the first communication apparatus. Correspondingly, the first communication apparatus receives the second indication information from the second communication apparatus. The first communication apparatus detects the R data streams based on a DMRS port index combination. For example, the first communication apparatus performs MIMO detection on the R data streams. The second indication information indicates the demodulation reference signal DMRS port index combination, the DMRS port index combination includes a plurality of DMRS port indexes, and the plurality of DMRS port indexes are in one-to-one correspondence with the R data streams.

It should be understood that, that the plurality of DMRS port indexes are in one-to-one correspondence with the R data streams may be understood as that a quantity of DMRS port indexes is also R, that is, the quantity of DMRS port indexes is equal to the quantity of data streams. In this case, the R DMRS port indexes correspond to R DMRS ports, and the R DMRS ports are in one-to-one correspondence with the R data streams, that is, each data stream is transmitted through one DMRS port.

Optionally, the DMRS port index combination is one of a plurality of candidate DMRS port index combinations, and the plurality of candidate DMRS port index combinations are included in a DMRS port index combination set. The DMRS port index combination set may be represented in a form of a table, a function, a text, or a character string. This is not limited in this application.

Optionally, the second indication information and the first indication information may be a same message, or may be different messages. This is not limited in this application.

28

In an example, a DMRS signal corresponding to the DMRS port index is mapped to one OFDM symbol. The first data stream subset corresponds to a first DMRS port, and the second data stream subset corresponds to a second DMRS port. Frequency domain orthogonal cover codes FD-OCCs corresponding to any two first DMRS ports or any two second DMRS ports satisfy that FD-OCC subsequences ($w_f(0)$, $w_f(1)$) or ($w_f(2)$, $w_f(3)$) whose lengths are 2 are orthogonal. Alternatively, any two first DMRS ports or any two second DMRS ports belong to different code division multiplexing CDM groups.

In other words, if a DMRS configured by the network device for the terminal device is a single-symbol DMRS, FD-OCCs corresponding to DMRS ports in any sub-receiver corresponding to the terminal device satisfy that FD-OCC subsequences ($w_f(0)$, $w_f(1)$) or ($w_f(2)$, $w_f(3)$) whose lengths are 2 are orthogonal, or ports whose FD-OCC subsequences ($w_f(0)$, $w_f(1)$) or ($w_f(2)$, $w_f(3)$) are not orthogonal belong to different CDM groups.

Optionally, a first port group includes one or more third DMRS ports, and the third DMRS port is associated with a second-type data stream corresponding to the first antenna port group. A second port group includes one or more fourth DMRS ports, and the fourth DMRS port is associated with a second-type data stream corresponding to the second antenna port group. The second-type data stream is a data stream in the first data stream subset or the second data stream subset other than the first-type data stream. The third DMRS port belongs to the first DMRS port, and the fourth DMRS port belongs to the second DMRS port. FD-OCCs corresponding to any third DMRS port and any fourth DMRS port satisfy that FD-OCC sequences ($w_f(0)$, $w_f(1)$, $w_f(2)$, $w_f(3)$) whose lengths are 4 are orthogonal, and the FD-OCCs satisfy that a correlation coefficient between FD-OCC subsequences ($w_f(0)$, $w_f(1)$) or ($w_f(2)$, $w_f(3)$) whose lengths are 2 is 1.

In other words, a DMRS port (that is, a third DMRS port) corresponding to a non-mergeable data stream (that is, a second-type data stream) corresponding to the sub-receiver 1 (that is, the first antenna port group) forms a port group 1 (that is, the first port group), and a DMRS port (that is, a fourth DMRS port) corresponding to a non-mergeable data stream (that is, a second-type data stream) corresponding to the sub-receiver 2 (that is, the second antenna port group) forms a port group 2 (that is, the second port group). FD-OCCs corresponding to any DMRS port in the port group 1 and any DMRS port in the port group 2 satisfy that FD-OCC sequences ($w_f(0)$, $w_f(1)$, $w_f(2)$, $w_f(3)$) whose lengths are 4 are orthogonal, and a correlation coefficient between FD-OCC subsequences ($w_f(0)$, $w_f(1)$) or ($w_f(2)$, $w_f(3)$) whose lengths are 2 is 1.

It should be noted that the FD-OCC subsequence whose length is 2 is a subsequence including a part of elements of the FD-OCC sequence ($w_f(0)$, $w_f(1)$, $w_f(2)$, $w_f(3)$) whose length is 4. For example, ($w_f(0)$, $w_f(1)$) or ($w_f(2)$, $w_f(3)$) corresponds to a subsequence including the first two elements and a subsequence including the last two elements of the FD-OCC sequence whose length is 4. The FD-OCC sequence whose length is 4 is correspondingly mapped to four subcarriers, and the FD-OCC subsequence whose length is 2 is mapped to two of the subcarriers to which the FD-OCC sequence whose length is 4 is correspondingly mapped. Different DMRS ports correspond to different FD-OCC sequences whose lengths are 4.

FIG. 5 is a diagram of a relationship between FD-OCC sequences of different ports for an eType 1 single-symbol DMRS according to an embodiment of this application. As shown in FIG. 5, the eType 1 single-symbol DMRS is used as an example, which may support DMRS ports 0, 1, 2, 3, 8, 9, 10, and 11. For example, a CDM group 0 includes ports 0, 1, 8, and 9. FD-OCCs corresponding to the port 0 and each of the port 1 and the port 9 satisfy that FD-OCC subsequences whose lengths are 2 are orthogonal. FD-OCCs corresponding to the port 8 and each of the port 0 and the port 9 satisfy that FD-OCC subsequences whose lengths are 2 are orthogonal. FD-OCCs corresponding to the port 0 and the port 8 or corresponding to the port 1 and the port 9 satisfy that FD-OCC sequences ($w_f(0)$, $w_f(1)$, $w_f(2)$, $w_f(3)$) whose lengths are 4 are orthogonal. For another example, a CDM group 1 includes ports 2, 3, 10, and 11. FD-OCCs corresponding to the port 2 and each of the port 3 and the port 11 satisfy that FD-OCC subsequences whose lengths are 2 are orthogonal. FD-OCCs corresponding to the port 10 and each of the port 2 and the port 11 satisfy that FD-OCC subsequences whose lengths are 2 are orthogonal. FD-OCCs corresponding to the port 2 and the port 10 or corresponding to the port 3 and the port 11 satisfy that FD-OCC sequences ($w_f(0)$, $w_f(1)$, $w_f(2)$, $w_f(3)$) whose lengths are 4 are orthogonal.

According to the foregoing design criterion, when the quantity R of data streams is 5, it is assumed that the sub-receiver 1 (that is, the first antenna port group) corresponds to data streams 0, 1, 2, and 3, and the sub-receiver 2 (that is, the second antenna port group) corresponds to data streams 1, 2, 3, and 4. In this case, the first-type data stream (that is, the mergeable data stream) is the data streams 1, 2, and 3. When the quantity R of data streams is 6, it is assumed that the sub-receiver 1 (that is, the first antenna port group) corresponds to data streams 0, 1, 2, and 3, and the sub-receiver 2 (that is, the second antenna port group) corresponds to data streams 2, 3, 4, and 5. In this case, the first-type data stream (that is, the mergeable data stream) is the data streams 2 and 3. A DMRS port combination adapted to the low-complexity 6R receiver may be shown in Table 6.

Table 6 (eType 1 single-symbol)

| Two codewords: a codeword 0 enabled, and a codeword 1 enabled | | | |
|---|---|---|---|
| Value | Quantity of DMRS CDM groups to which data is not mapped | DMRS Port | Quantity of DMRS symbols |
| 0 | 2 | 0 2 1 3 8 | 1 |

(continued)

| | Two codewords: a codeword 0 enabled, and a codeword 1 enabled | | |
|---|---|---|---|
| Value | Quantity of DMRS CDM groups to which data is not mapped | DMRS Port | Quantity of DMRS symbols |
| 1 | 2 | 0 2 9 11 8 | 1 |
| 2 | 2 | 0 2 13 8 10 | 1 |
| 3 | 2 | 0 2 9 11 8 10 | 1 |

As shown in Table 6, a 1st row and a 2nd row represent DMRS port index combinations that may be configured when the quantity R of data streams is equal to 5. The 1st row {0, 2, 1, 3, 8} is used as an example. DMRS ports corresponding to the sub-receiver 1 are {0, 2, 1, 3}, and DMRS ports corresponding to the sub-receiver 2 are {2, 1, 3, 8}. FD-OCCs of the DMRS port 0 and the port 1 or FD-OCCs of the port 2 and the port 3 corresponding to the sub-receiver 1 satisfy that FD-OCC subsequences $(w_f(0), w_f(1))$ or $(w_f(2), w_f(3))$ whose lengths are 2 are orthogonal. FD-OCCs subsequences $(w_f(0), w_f(1))$ or $(w_f(2), w_f(3))$ corresponding to the DMRS port 0 and the port 2 or corresponding to the port 1 and the port 3 corresponding to the sub-receiver 1 are not orthogonal, but the port 0 and the port 2 or the port 1 and the port 3 belong to different CDM groups. Similarly, FD-OCCs of the DMRS port 1 and the port 8 or FD-OCCs of the port 2 and the port 3 corresponding to the sub-receiver 2 satisfy that FD-OCC subsequences $(w_f(0), w_f(1))$ or $(w_f(2), w_f(3))$ whose lengths are 2 are orthogonal. FD-OCCs subsequences $(w_f(0), w_f(1))$ or $(w_f(2), w_f(3))$ corresponding to the DMRS port 2 and the port 8 or corresponding to the port 1 and the port 3 corresponding to the sub-receiver 2 are not orthogonal, but the port 2 and the port 8 or the port 1 and the port 3 belong to different CDM groups.

According to the foregoing design criterion, when the quantity R of data streams is 5, it is assumed that the sub-receiver 1 (that is, the first antenna port group) corresponds to data streams 0, 1, 2, and 3, and the sub-receiver 2 (that is, the second antenna port group) corresponds to data streams 1, 2, 3, and 4. In this case, the first-type data stream (that is, the mergeable data stream) is the data streams 1, 2, and 3. When the quantity R of data streams is 6, it is assumed that the sub-receiver 1 (that is, the first antenna port group) corresponds to data streams 0, 1, 2, and 3, and the sub-receiver 2 (that is, the second antenna port group) corresponds to data streams 2, 3, 4, and 5. In this case, the first-type data stream (that is, the mergeable data stream) is the data streams 2 and 3. A DMRS port combination adapted to the low-complexity 6R receiver may be shown in Table 7.

Table 7 (eType 2 single-symbol)

| | Two codewords: a codeword 0 enabled, and a codeword 1 enabled | | |
|---|---|---|---|
| Value | Quantity of DMRS CDM groups to which data is not mapped | DMRS Port | Quantity of DMRS symbols |
| 0 | 2 | 0 2 1 3 12 | 1 |
| 1 | 2 | 0 2 13 15 12 | 1 |
| 2 | 2 | 2 4 3 5 14 | 1 |
| 3 | 2 | 2 4 15 17 14 | 1 |
| 4 | 3 | 0 2 1 3 12 | 1 |
| 5 | 3 | 0 2 13 15 12 | 1 |
| 6 | 3 | 2 4 3 5 14 | 1 |
| 7 | 3 | 2 4 15 17 14 | 1 |
| 8 | 2 | 0 2 1 3 12 14 | 1 |
| 9 | 2 | 0 2 13 15 12 14 | 1 |
| 10 | 2 | 2 4 3 5 14 16 | 1 |
| 11 | 2 | 2 4 15 17 14 16 | 1 |
| 12 | 3 | 0 2 1 3 12 14 | 1 |
| 13 | 3 | 0 2 13 15 12 14 | 1 |
| 14 | 3 | 2 4 3 5 14 16 | 1 |

(continued)

| Two codewords: a codeword 0 enabled, and a codeword 1 enabled | | | |
|---|---|---|---|
| Value | Quantity of DMRS CDM groups to which data is not mapped | DMRS Port | Quantity of DMRS symbols |
| 15 | 3 | 2 4 15 17 14 16 | 1 |

As shown in Table 7, the first eight rows represent DMRS port index combinations that may be configured when the quantity R of data streams is equal to 5, and the last eight rows represent DMRS port index combinations that may be configured when the quantity R of data streams is equal to 6. A 1st row {0, 2, 1, 3, 12} is used as an example. DMRS ports corresponding to the sub-receiver 1 are {0, 2, 1, 3}, and DMRS ports corresponding to the sub-receiver 2 are {2, 1, 3, 12}. FD-OCCs of the DMRS port 0 and the port 1 or FD-OCCs of the port 2 and the port 3 corresponding to the sub-receiver 1 satisfy that FD-OCC subsequences $(w_f(0), w_f(1))$ or $(w_f(2), w_f(3))$ whose lengths are 2 are orthogonal. FD-OCCs subsequences $(w_f(0), w_f(1))$ or $(w_f(2), w_f(3))$ corresponding to the DMRS port 0 and the port 2 or corresponding to the port 1 and the port 3 corresponding to the sub-receiver 1 are not orthogonal, but the port 0 and the port 2 or the port 1 and the port 3 belong to different CDM groups. Similarly, FD-OCCs of the DMRS port 1 and the port 12 or FD-OCCs of the port 2 and the port 3 corresponding to the sub-receiver 2 satisfy that FD-OCC subsequences $(w_f(0), w_f(1))$ or $(w_f(2), w_f(3))$ whose lengths are 2 are orthogonal. FD-OCCs subsequences $(w_f(0), w_f(1))$ or $(w_f(2), w_f(3))$ corresponding to the DMRS port 2 and the port 12 or corresponding to the port 1 and the port 3 corresponding to the sub-receiver 2 are not orthogonal, but the port 2 and the port 12 or the port 1 and the port 3 belong to different CDM groups.

In another example, a DMRS signal corresponding to the DMRS port index is mapped to two OFDM symbols. The first data stream subset corresponds to a first DMRS port, and the second data stream subset corresponds to a second DMRS port. Time domain orthogonal cover code TD-OCC sequences corresponding to any two first DMRS ports or any two second DMRS ports are orthogonal. Alternatively, FD-OCC subsequences $(w_f(0), w_f(1))$ or $(w_f(2), w_f(3))$ that correspond to DMRS ports whose TD-OCC sequences are not orthogonal and that have a length of 2 are orthogonal.

In other words, if a DMRS configured by the network device for the terminal device is a double-symbol DMRS, TD-OCC sequences corresponding to DMRS ports of any sub-receiver corresponding to the terminal device are orthogonal, or FD-OCC subsequences $(w_f(0), w_f(1))$ or $(w_f(2), w_f(3))$ that correspond to ports whose TD-OCC sequences are not orthogonal and that have a length of 2 are orthogonal.

Optionally, a third port group includes one or more third DMRS ports, and the third DMRS port is associated with a second-type data stream corresponding to the first antenna port group. A fourth port group includes one or more fourth DMRS ports, and the fourth DMRS port is associated with a second-type data stream corresponding to the second antenna port group. The second-type data stream is a data stream in the first data stream subset or the second data stream subset other than the first-type data stream. The third DMRS port belongs to the first DMRS port, and the fourth DMRS port belongs to the second DMRS port. A correlation coefficient between TD-OCCs corresponding to any third DMRS port and any second DMRS port is 1, and FD-OCCs satisfy that FD-OCC sequences $(w_f(0), w_f(1), w_f(2), w_f(3))$ whose lengths are 4 are orthogonal.

In other words, a DMRS port (that is, a third DMRS port) corresponding to a non-mergeable data stream (that is, a second-type data stream) corresponding to the sub-receiver 1 (that is, the first antenna port group) forms a port group 3 (that is, the third port group), and a DMRS port (that is, a fourth DMRS port) corresponding to a non-mergeable data stream (that is, a second-type data stream) corresponding to the sub-receiver 2 (that is, the second antenna port group) forms a port group 4 (that is, the fourth port group). A correlation coefficient between TD-OCCs corresponding to any DMRS port in the port group 3 and any DMRS port in the port group 4 is 1, and FD-OCC sequences whose lengths are 4 are orthogonal.

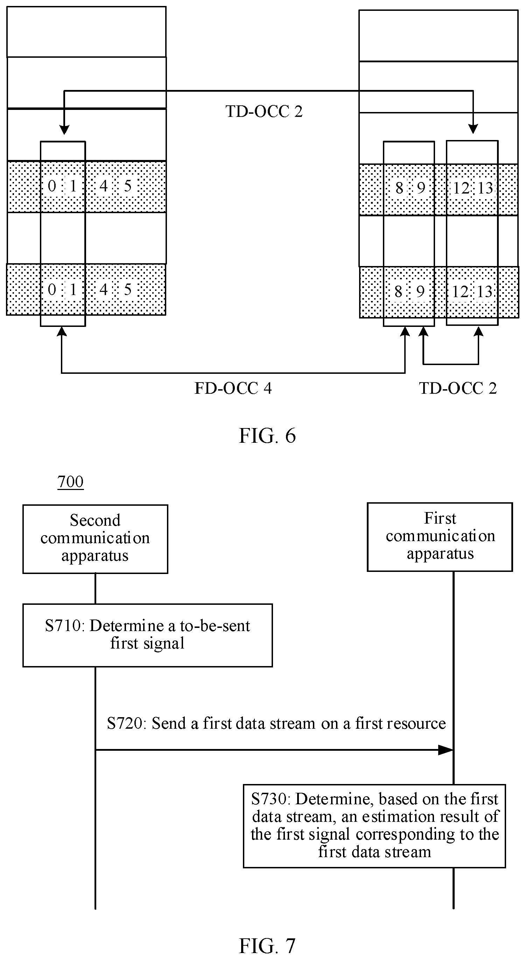

FIG. 6 is a diagram of a relationship between FD-OCC sequences of different ports for an eType 1 double-symbol DMRS according to an embodiment of this application. As shown in FIG. 6, the eType 1 double-symbol DMRS is used as an example. A CDM group 0 may support DMRS ports 0, 1, 4, 5, 8, 9, 12, and 13, and a CDM group 1 may support ports 2, 3, 6, 7, 10, 11, 14, and 15. TD-OCC sequences corresponding to the port 0/1 and the port 4/5 are orthogonal. TD-OCC sequences corresponding to the port 0/1 and the port 12/13 are orthogonal. FD-OCC sequences corresponding to the port 0/1 and the port 8/9 are orthogonal. FD-OCC sequences corresponding to the port 4/5 and the port 12/13 are orthogonal.

According to the foregoing design criterion, when the quantity R of data streams is 5, it is assumed that the sub-receiver 1 (that is, the first antenna port group) corresponds to data streams 0, 1, 2, and 3, and the sub-receiver 2 (that is, the second antenna port group) corresponds to data streams 1, 2, 3, and 4. In this case, the first-type data stream (that is, the mergeable data stream) is the data streams 1, 2, and 3. When the quantity R of data streams is 6, it is assumed that the sub-receiver 1 (that is, the first antenna port group) corresponds to data streams 0, 1, 2, and 3, and the sub-receiver 2 (that is, the second antenna port group) corresponds to data streams 2, 3, 4, and 5. In this case, the first-type data stream (that is, the mergeable data stream) is the data streams 2 and 3. A DMRS port combination adapted to the low-complexity 6R receiver may be shown in Table 8.

EP 4 757 217 A1

Table 8 (eType 1 double-symbol)

| Two codewords: a codeword 0 enabled, and a codeword 1 enabled | | | |
|---|---|---|---|
| Value | Quantity of DMRS CDM groups to which data is not mapped | DMRS Port | Quantity of DMRS symbols |
| 0 | 1 | 0 1 12 13 8 | 2 |
| 1 | 1 | 0 1 4 5 8 | 2 |
| 2 | 1 | 2 3 14 15 10 | 2 |
| 3 | 1 | 2 3 6 7 10 | 2 |
| 4 | 1 | 0 1 12 13 8 9 | 2 |
| 5 | 1 | 0 1 4 5 8 9 | 2 |
| 6 | 1 | 2 3 14 15 10 11 | 2 |
| 7 | 1 | 2 3 6 7 10 11 | 2 |

As shown in Table 8, a 1st to 4th rows represent DMRS port index combinations that may be configured when the quantity R of data streams is equal to 5, and a 5th to 8th rows represent DMRS port index combinations that may be configured in a case of the quantity R6 of data streams. The 6th row of DMRS ports {0, 1, 4, 5, 8, 9} is used as an example. DMRS ports corresponding to the sub-receiver 1 are {0, 1, 4, 5}, and DMRS ports corresponding to the sub-receiver 2 are {4, 5, 8, 9}. FD-OCCs of the DMRS port 0 and the port 1 or FD-OCCs of the port 4 and the port 5 corresponding to the sub-receiver 1 satisfy that FD-OCC subsequences $(w_f(0), w_f(1))$ or $(w_f(2), w_f(3))$ whose lengths are 2 are orthogonal. FD-OCC subsequences $(w_f(0), w_f(1))$ or $(w_f(2), w_f(3))$ corresponding to the DMRS port 0/1 and the port 4/5 corresponding to the sub-receiver 1 are not orthogonal, but corresponding TD-OCCs are orthogonal. Similarly, FD-OCCs of the DMRS port 4 and the port 5 or FD-OCCs of the port 8 and the port 9 corresponding to the sub-receiver 2 satisfy that FD-OCC subsequences $(w_f(0), w_f(1))$ or $(w_f(2), w_f(3))$ whose lengths are 2 are orthogonal. FD-OCC subsequences $(w_f(0), w_f(1))$ or $(w_f(2), w_f(3))$ corresponding to the DMRS port 4/5 and the port 8/9 corresponding to the sub-receiver 2 are not orthogonal, but TD-OCCs are orthogonal.

According to the foregoing solution, for differentiation of channel estimation capabilities of different DMRS ports corresponding to different FD-OCC lengths, a DMRS port allocation policy for each data stream corresponding to the low-complexity 6R receiver is designed. Interference between the two sub-receivers is suppressed through precoding. Therefore, a port with a stronger channel estimation capability (smaller interference) is used inside each sub-receiver, and a port with a weak channel estimation capability is used between the two sub-receivers. Spatial isolation or orthogonalization is performed through precoding, so that a performance loss caused by imbalance of the channel estimation capabilities of the DMRS ports, especially in a large frequency-selective channel scenario, can be effectively avoided.

According to the foregoing design criterion, when the quantity R of data streams is 5, it is assumed that the sub-receiver 1 (that is, the first antenna port group) corresponds to data streams 0, 1, 2, and 3, and the sub-receiver 2 (that is, the second antenna port group) corresponds to data streams 1, 2, 3, and 4. In this case, the first-type data stream (that is, the mergeable data stream) is the data streams 1, 2, and 3. When the quantity R of data streams is 6, it is assumed that the sub-receiver 1 (that is, the first antenna port group) corresponds to data streams 0, 1, 2, and 3, and the sub-receiver 2 (that is, the second antenna port group) corresponds to data streams 2, 3, 4, and 5. In this case, the first-type data stream (that is, the mergeable data stream) is the data streams 2 and 3. A DMRS port combination adapted to the low-complexity 6R receiver may be shown in Table 9.

Table 9 (eType 2 double-symbol)

| Two codewords: a codeword 0 enabled, and a codeword 1 enabled | | | |
|---|---|---|---|
| Value | Quantity of DMRS CDM groups to which data is not mapped | DMRS Port | Quantity of DMRS symbols |
| 0 | 1 | 0 1 18 19 12 | 2 |
| 1 | 1 | 0 1 6 7 12 | 2 |
| 2 | 1 | 2 3 20 21 14 | 2 |
| 3 | 1 | 2 3 8 9 14 | 2 |
| 4 | 1 | 4 5 22 23 16 | 2 |

(continued)

| Two codewords: a codeword 0 enabled, and a codeword 1 enabled | | | |
|---|---|---|---|
| Value | Quantity of DMRS CDM groups to which data is not mapped | DMRS Port | Quantity of DMRS symbols |
| 5 | 1 | 4 5 1 0 11 16 | 2 |
| 6 | 1 | 0 1 18 19 12 13 | 2 |
| 7 | 1 | 0 1 6 7 12 13 | 2 |
| 8 | 1 | 2 3 20 21 14 15 | 2 |
| 9 | 1 | 2 3 8 9 14 15 | 2 |
| 10 | 1 | 4 5 22 23 16 17 | 2 |
| 11 | 1 | 4 5 10 11 16 17 | 2 |
| 12 | 2 | 0 1 18 19 12 | 2 |
| 13 | 2 | 0 1 6 7 12 | 2 |
| 14 | 2 | 2 3 20 21 14 | 2 |
| 15 | 2 | 2 3 8 9 14 | 2 |
| 16 | 2 | 4 5 22 23 16 | 2 |
| 17 | 2 | 4 5 10 11 16 | 2 |
| 18 | 2 | 0 1 18 19 12 13 | 2 |
| 19 | 2 | 0 1 6 7 12 13 | 2 |
| 20 | 2 | 2 3 20 21 14 15 | 2 |
| 21 | 2 | 2 3 8 9 14 15 | 2 |
| 22 | 2 | 4 5 22 23 16 17 | 2 |
| 23 | 2 | 4 5 10 11 16 17 | 2 |
| 24 | 3 | 0 1 18 19 12 | 2 |
| 25 | 3 | 0 1 6 7 12 | 2 |
| 26 | 3 | 2 3 20 21 14 | 2 |
| 27 | 3 | 2 3 8 9 14 | 2 |
| 28 | 3 | 4 5 22 23 16 | 2 |
| 29 | 3 | 4 5 10 11 16 | 2 |
| 30 | 3 | 0 1 18 19 12 13 | 2 |
| 31 | 3 | 0 1 6 7 12 13 | 2 |
| 32 | 3 | 2 3 20 21 14 15 | 2 |
| 33 | 3 | 2 3 8 9 14 15 | 2 |
| 34 | 3 | 4 5 22 23 16 17 | 2 |
| 35 | 3 | 4 5 10 11 16 17 | 2 |

As shown in Table 9, the first 30 rows represent DMRS port index combinations that may be configured when the quantity R of data streams is equal to 5, and the last six rows represent DMRS port index combinations that may be configured in a case of the quantity R6 of data streams. The 36th row of DMRS ports {4, 5, 10, 11, 16,17} is used as an example. DMRS ports corresponding to the sub-receiver 1 are {4, 5, 10, 11}, and DMRS ports corresponding to the sub-receiver 2 are {10, 11, 16, 17}. FD-OCCs of the DMRS port 4 and the port 5 or FD-OCCs of the port 10 and the port 11 corresponding to the sub-receiver 1 satisfy that FD-OCC subsequences ($w_f(0)$, $w_f(1)$) or ($w_f(2)$, $w_f(3)$) whose lengths are 2 are orthogonal. FD-OCC subsequences ($w_f(0)$, $w_f(1)$) or ($w_f(2)$, $w_f(3)$) corresponding to the DMRS port 4/5 and the port 10/11 corresponding to the sub-receiver 1 are not orthogonal, but corresponding TD-OCCs are orthogonal. Similarly, FD-OCCs of the DMRS port 10 and the port 11 or FD-OCCs of the port 16 and the port 17 corresponding to the sub-receiver 2 satisfy that FD-OCC subsequences $(w_f(0)$, $w_f(1))$ or $(w_f(2)$, $w_f(3))$ whose lengths are 2 are orthogonal. FD-OCC subsequences $(w_f(0)$, $w_f(1))$ or $(w_f(2)$, $w_f(3))$ corresponding to the DMRS port 10/11 and the port 16/17 corresponding to the sub-receiver 2 are not orthogonal, but TD-OCCs are orthogonal.

According to the foregoing DMRS port allocation criterion, the second communication apparatus may implicitly indicate the index of the first-type data stream by indicating the DMRS port index combination. In other words, for a single-symbol DMRS, the second communication apparatus uses the DMRS port index combination indicated by the second indication information, to ensure that for a DMRS port corresponding to the first-type data stream and another DMRS port, FD-OCC subsequences $(w_f(0)$, $w_f(1))$ or $(w_f(2)$, $w_f(3))$ whose lengths are 2 are orthogonal. For a double-symbol DMRS, the second communication apparatus uses the DMRS port index combination indicated by the second indication information, to ensure that for a DMRS port corresponding to the first-type data stream and another DMRS port, FD-OCC subsequences $(w_f(0)$, $w_f(1))$ or $(w_f(2)$, $w_f(3))$ whose lengths are 2 are orthogonal or TD-OCCs are orthogonal.

For example, the quantity R of data streams is 6. For an eType 1 single-symbol DMRS, optionally, a DMRS port combination adapted to the low-complexity 6R receiver may be shown in Table 10. As shown in Table 10, six candidate DMRS port index combinations are included in total. If the second indication information indicates a row corresponding to an index 0 or 1, it may be determined, according to the foregoing rule, that the first-type data stream is a first stream and a second stream. If the second indication information indicates a row corresponding to an index 2 or 3, it may be determined, according to the foregoing rule, that the first-type data stream is a third stream and a fourth stream. If the second indication information indicates a row corresponding to an index 4 or 5, it may be determined, according to the foregoing rule, that the first-type data stream is a fifth stream and a sixth stream. Because a quantity of candidate DMRS port index combinations corresponding to the quantity R of data streams that is less than or equal to 4 is far greater than a quantity of DMRS port index combinations corresponding to R greater than 4, implicitly indicating the index of the first-type data stream by using the DMRS port index combination in this implementation can reduce the indication overheads.

Table 10 (eType 1 single-symbol)

| Two codewords: a codeword 0 enabled, and a codeword 1 enabled | | | |
|---|---|---|---|
| Value | Quantity of DMRS CDM groups to which data is not mapped | DMRS Port | Quantity of DMRS symbols |
| 0 | 2 | 1 3 0 2 8 10 | 1 |
| 1 | 2 | 9 11 0 2 8 10 | 1 |
| 2 | 2 | 0 2 1 3 8 10 | 1 |
| 3 | 2 | 0 2 9 11 8 10 | 1 |
| 4 | 2 | 0 2 8 10 1 3 | 1 |
| 5 | 2 | 0 2 8 10 9 11 | 1 |

For example, the quantity R of data streams is 6. For an eType 2 single-symbol DMRS, optionally, a DMRS port combination adapted to the low-complexity 6R receiver may be shown in Table 11. As shown in Table 11, 24 candidate DMRS port index combinations are included in total. If the second indication information indicates a row corresponding to an index 0, 1, 2, 3, 12, 13, 14, or 15, it may be determined, according to the foregoing rule, that the first-type data stream is a first stream and a second stream. If the second indication information indicates a row corresponding to an index 4, 5, 6, 7, 16, 17, 18, or 19, it may be determined, according to the foregoing rule, that the first-type data stream is a third stream and a fourth stream. If the second indication information indicates a row corresponding to an index 8, 9, 10, 11, 20, 21, 22, or 23, it may be determined, according to the foregoing rule, that the first-type data stream is a fifth stream and a sixth stream.

Table 11 (eType 2 single-symbol)

| Two codewords: a codeword 0 enabled, and a codeword 1 enabled | | | |
|---|---|---|---|
| Value | Quantity of DMRS CDM groups to which data is not mapped | DMRS Port | Quantity of DMRS symbols |
| 0 | 2 | 1 3 0 2 12 14 | 1 |
| 1 | 2 | 13 15 0 2 12 14 | 1 |
| 2 | 2 | 3 5 2 4 14 16 | 1 |
| 3 | 2 | 15 17 2 4 14 16 | 1 |

(continued)

| Two codewords: a codeword 0 enabled, and a codeword 1 enabled | | | |
|---|---|---|---|
| Value | Quantity of DMRS CDM groups to which data is not mapped | DMRS Port | Quantity of DMRS symbols |
| 4 | 2 | 0 2 13 12 14 | 1 |
| 5 | 2 | 0 2 13 15 12 14 | 1 |
| 6 | 2 | 2 4 3 5 14 16 | 1 |
| 7 | 2 | 2 4 15 17 14 16 | 1 |
| 8 | 2 | 0 2 12 14 1 3 | 1 |
| 9 | 2 | 0 2 12 14 13 15 | 1 |
| 10 | 2 | 2 4 14 16 3 5 | 1 |
| 11 | 2 | 2 4 14 16 15 17 | 1 |
| 12 | 3 | 1 3 0 2 12 14 | 1 |
| 13 | 3 | 1 3 15 0 2 12 14 | 1 |
| 14 | 3 | 3 5 2 4 14 16 | 1 |
| 15 | 3 | 15 17 2 4 14 16 | 1 |
| 16 | 3 | 0 2 1 3 12 14 | 1 |
| 17 | 3 | 0 2 13 15 12 14 | 1 |
| 18 | 3 | 2 4 3 5 14 16 | 1 |
| 19 | 3 | 2 4 15 17 14 16 | 1 |
| 20 | 3 | 0 2 12 14 1 3 | 1 |
| 21 | 3 | 0 2 12 14 13 15 | 1 |
| 22 | 3 | 2 4 14 16 3 5 | 1 |
| 23 | 3 | 2 4 14 16 15 17 | 1 |

According to the foregoing solution, the index information of the first-type data stream is implicitly notified by using a preset design criterion of the DMRS port index combination. Because the quantity of candidate DMRS port index combinations corresponding to R<(4 is far greater than the quantity of candidate DMRS port index combinations corresponding to R>4, a bit length of a signaling field indicating the DMRS port index combination depends on a scenario in which R<4. Therefore, implicitly indicating the index of the first-type data stream by using the DMRS port index combination in the solution of this application can reduce the indication overheads.

Manner 3

Considering that detection performance of the first-type data stream corresponding to a low-complexity 6R receiver is significantly better than detection performance of another data stream (that is, the second-type data stream), and a current codeword-to-layer mapping rule is mapping a modulated symbol corresponding to a codeword to a first half of a data stream, and mapping a modulated symbol corresponding to a codeword to a second half of the data stream, a transmit end may separately assign the first-type data stream (or a data stream on which merging can be performed) to two codewords during precoding, and therefore, signals on data streams with differentiated performance exist in each codeword. Processing can be performed in each codeword by using only one modulation and coding scheme (modulation and coding scheme, MCS), and a defined codeword-to-layer mapping manner is fixed, and cannot adapt to differentiated data stream detection performance of the low-complexity receiver. Differentiated performance requires different performance to be considered during MCS selection for the codeword, affecting overall performance. Therefore, it is a problem needing to be considered of how to design an appropriate codeword-to-layer mapping manner, so that differentiated data streams can belong to different codewords, and differentiated modulation and coding schemes can be selected, maximally improving system performance.
Optionally, the method 400 may further include the following step.

S402: The second communication apparatus sends third indication information to the first communication apparatus. Correspondingly, the first communication apparatus receives the third indication information from the second communication apparatus. The first communication apparatus determines, based on a codeword-to-layer mapping rule and an association relationship between different quantities of data streams and a quantity of first-type data streams, that a data stream corresponding to a first codeword is the first-type data stream, where a quantity of data streams corresponding to the first codeword is equal to the quantity of first-type data streams. The third indication information indicates the codeword-to-layer mapping rule, and the codeword-to-layer mapping rule represents a correspondence between the first codeword, a second codeword, and the R data streams under the quantity R of data streams.

For example, the predefined quantity of first-type data streams corresponding to the quantity R of data streams is compared with the quantity of data streams mapped to the first codeword and a quantity of data streams mapped to the second codeword. If the quantity of data streams mapped to a codeword is equal to the quantity of first-type data streams, the data stream mapped to the codeword is the first-type data stream.

For example, the association relationship between the quantity of data streams and the quantity of first-type data streams is predefined, or the association relationship between the quantity of data streams and the quantity of first-type data streams is configured by using signaling. For example, when the quantity R of data streams is 5, the quantity of first-type data streams is 3; or when the quantity R of data streams is 6, the quantity of first-type data streams is 2.

Optionally, the third indication information and the first indication information may be a same message, or may be different messages. This is not limited in this application.

For example, the first-type data stream in the R data streams is associated with the first codeword, the second-type data stream in the R data streams is associated with the second codeword, and the second-type data stream is a data stream in the first data stream subset or the second data stream subset other than the first-type data stream. In other words, the data stream on which merging can be performed is associated with one codeword, and the data stream on which merging cannot be performed is associated with another codeword.

Optionally, the codeword-to-layer mapping rule is one of a plurality of candidate codeword-to-layer mapping rules, where the plurality of candidate codeword-to-layer mapping rules are predefined, or the plurality of candidate codeword-to-layer mapping rules are configured by using signaling.

For example, the quantity R of data streams is 5. The plurality of candidate codeword-to-layer mapping rules may be defined, as shown in Table 12 below. It should be understood that Table 12 is merely an example provided for ease of understanding, and do not constitute a limitation on the technical solutions of this application. A relationship between the value of the quantity R of data streams, the value of the index, and codeword-to-layer mapping is not specifically limited in embodiments of this application. Optionally, the example of using the table to describe the candidate codeword-to-layer mapping rule is merely an implementation. The candidate codeword-to-layer mapping rule may alternatively exist in a form of a function, a text, or a character string. This is not limited in this application.

Table 12

| Index | Quantity of data streams | Quantity of codewords | Codeword-to-layer mapping |
|---|---|---|---|
| 0 | 5 | 2 | $x^0(i) = d^0(2i)$<br>$x^1(i) = d^0(2i + 1)$<br>$\boldsymbol{x^2(i) = d^1(3i)}$<br>$\boldsymbol{x^3(i) = d^1(3i + 1)}$<br>$\boldsymbol{x^4(i) = d^1(3i + 2)}$ |
| 1 | 5 | 2 | $x^0(i) = d^0(2i)$<br>$\boldsymbol{x^1(i) = d^1(3i)}$<br>$\boldsymbol{x^2(i) = d^1(3i + 1)}$<br>$\boldsymbol{x^3(i) = d^1(3i + 2)}$<br>$x^4(i) = d^0(2i + 1)$ |
| 2 | 5 | 2 | $\boldsymbol{x^0(i) = d^0(3i)}$<br>$\boldsymbol{x^1(i) = d^0(3i + 1)}$<br>$\boldsymbol{x^2(i) = d^0(3i + 2)}$<br>$x^3(i) = d^1(2i)$<br>$x^4(i) = d^1(2i + 1)$ |

For example, the quantity R of data streams is 5. The third indication information may indicate that the codeword-to-layer mapping rule is a row corresponding to an index 0 in Table 9, indicating that a symbol corresponding to the first codeword is mapped to a data stream 0 and a data stream 1, and a symbol corresponding to the second codeword is mapped to data streams 2 to 4. For a low-complexity 6R receiver with R(5, the quantity of first-type data streams is 3. Therefore, the first-type data stream includes the data streams 2 to 4, corresponding to the second codeword. If the third indication information indicates that the codeword-to-layer mapping rule is a row corresponding to an index 1 in Table 9, it indicates that a symbol corresponding to the first codeword is mapped to a data stream 0 and a data stream 4, and a symbol corresponding to the second codeword is mapped to data streams 1 to 3. For a low-complexity 6R receiver with R(6, the quantity of first-type data streams is 3. Therefore, the first-type data stream includes the data streams 1 to 3, corresponding to the second codeword.

For example, the quantity R of data streams is 6. The plurality of candidate codeword-to-layer mapping rules may be defined, as shown in Table 13 below. It should be understood that Table 13 is merely an example provided for ease of understanding, and do not constitute a limitation on the technical solutions of this application. A relationship between the value of the quantity R of data streams, the value of the index, and codeword-to-layer mapping is not specifically limited in embodiments of this application. Optionally, the example of using the table to describe the candidate codeword-to-layer mapping rule is merely an implementation. The candidate codeword-to-layer mapping rule may alternatively exist in a form of a function, a text, or a character string. This is not limited in this application.

Table 13

| Index | Quantity of data streams | Quantity of codewords | Codeword-to-layer mapping |
|---|---|---|---|
| 0 | 6 | 2 | $\boldsymbol{x^0(i) = d^0(2i)}$<br>$\boldsymbol{x^1(i) = d^0(2i + 1)}$<br>$x^2(i) = d^1(4i)$<br>$x^3(i) = d^1(4i + 1)$<br>$x^4(i) = d^1(4i + 2)$<br>$x^5(i) = d^1(4i + 3)$ |
| 1 | 6 | 2 | $x^0(i) = d^0(4i)$<br>$x^1(i) = d^0(4i + 1)$<br>$\boldsymbol{x^2(i) = d^1(2i)}$<br>$\boldsymbol{x^3(i) = d^1(2i + 1)}$<br>$x^4(i) = d^0(4i + 2)$<br>$x^5(i) = d^0(4i + 3)$ |
| 2 | 6 | 2 | $x^0(i) = d^0(4i)$<br>$x^1(i) = d^0(4i + 1)$<br>$x^2(i) = d^0(4i + 2)$<br>$x^3(i) = d^0(4i + 3)$<br>$\boldsymbol{x^4(i) = d^1(2i)}$<br>$\boldsymbol{x^5(i) = d^1(2i + 1)}$ |

For example, the quantity R of data streams is 6. The third indication information may indicate that the codeword-to-layer mapping rule is a row corresponding to an index 2 in Table 10, indicating that a symbol corresponding to the first codeword is mapped to data streams 0 to 3, and a symbol corresponding to the second codeword is mapped to data streams 4 and 5. For a low-complexity 6R receiver with R(6, the quantity of first-type data streams is 2. Therefore, the first-type data stream includes the first-type data streams 4 and 5, corresponding to the second codeword. If the third indication information indicates that the codeword-to-layer mapping rule is a row corresponding to an index 0 in Table 10, it indicates that a symbol corresponding to the first codeword is mapped to data streams 0 and 1, and a symbol corresponding to the second codeword is mapped to data streams 2 to 5. For a low-complexity 6R receiver with R(6, the quantity of first-type data streams is 2. Therefore, the first-type data stream includes the data streams 0 and 1, corresponding to the second codeword.

According to the foregoing solution, the first-type data stream is associated with one codeword, and detection performance of the first-type data stream is better than that of the other second-type data stream. The first-type data stream and the second-type data stream are associated with different codewords, and a modulation and coding scheme is independently selected for each codeword. This can better help provide a more adaptive modulation and coding scheme for differentiated spatial layers, maximizing performance advantages of a data stream with high performance. In other words, a data stream with high detection performance and a data stream with low detection performance correspond to different codewords, so that differentiated performance of different symbols in one codeword can be avoided, and a more appropriate MCS is allocated to differentiated data streams. In addition, with a preset rule, the information about the first-type data stream may be implicitly indicated by indicating the codeword-to-layer mapping rule, so that the first communication apparatus can accurately perform merging.

Considering that the detection performance of the first-type data stream (that is, a mergeable data stream) corresponding to the low-complexity 6R receiver is significantly better than the detection performance of the other data stream (that is, the second-type data stream), performance corresponding to different data streams is differentiated, and system performance usually depends on performance of a worst data stream. Therefore, it is currently a problem needing to be considered of how to design a transmission mechanism that adapts to the low-complexity 6R receiver, so that performance of different data streams is more balanced, and differentiated performance and differentiated experience are avoided.

FIG. 7 is a schematic flowchart of a communication method 700 according to an embodiment of this application. As shown in FIG. 7, the method may be performed by a first communication apparatus and a second communication apparatus. The method includes the following plurality of steps. For details, refer to an existing protocol.

For example, the first communication apparatus may be a terminal device, or may be a chip (or a chip system) or a circuit of a terminal device, and the second communication apparatus may be a network device, or may be a chip (or a chip system) or a circuit of a network device. This is not limited in this application.

S710: The second communication apparatus determines a to-be-sent first signal.

S720: The second communication apparatus sends a first data stream to the first communication apparatus on a first resource. Correspondingly, the first communication apparatus receives the first data stream from the second communication apparatus on the first resource. The first data stream is determined based on the first signal.

For example, the network device sends a downlink data signal to the terminal device, where the downlink data signal is mapped to a time-frequency resource whose frequency domain bandwidth length is X frequency domain units, to obtain the first data stream. For example, the first data stream may include R(6 data streams. A quantity of first data streams is not limited in this application. Optionally, the first data stream herein may alternatively be the following "first data stream set".

A frequency domain resource of the first resource includes the X frequency domain units, the frequency domain unit includes one or more resource blocks RBs, and each frequency domain unit includes at least two first-type data streams, where X is an integer greater than 1. For example, the frequency domain unit may be a frequency domain subband including two RBs, four RBs, eight RBs, or 16 RBs. One frequency domain unit may be considered as one subband, for example, a precoding resource block group (precoding resource block group, PRG) or a frequency domain resource including a plurality of PRGs.

For example, the X frequency domain units may be frequency domain units included in a scheduled data bandwidth or a part of frequency domain units included in a scheduled data bandwidth. In other words, the X frequency domain units may be frequency domain units to which a data channel is mapped or a part of frequency domain units to which a data channel is mapped.

It should be noted that the first-type data stream is a same data stream included in a first data stream subset and a second data stream subset.

In embodiments of this application, the "first-type data stream" may be understood as a data stream included in the two data stream subsets, a data stream existing in the two data stream subsets, or a same part of data streams included in the two data stream subsets. In other words, merging can be performed on the "first-type data stream" for the first communication apparatus. Therefore, the "first-type data stream" may alternatively be a "mergeable data stream". Correspondingly, in embodiments of this application, a data stream in the two data stream subsets other than the "first-type data stream" is collectively referred to as a "second-type data stream". Therefore, the "second-type data stream" may alternatively be a "non-mergeable data stream". This is not limited in this application.

It should be noted that "mergeable" or "merging can be performed" may be understood as follows: A signal received by a terminal receive antenna associated with a first antenna port group corresponding to the first communication apparatus is used to detect information corresponding to the first-type data stream. Similarly, a signal received by a terminal receive antenna associated with a second antenna port group corresponding to the first communication apparatus is also used to detect the information corresponding to the first-type data stream. On a receive side, the first communication apparatus may merge estimation results of the information about the first-type data stream that are obtained through detection based on the signal received by the terminal receive antenna associated with the first antenna port group and the signal received by the terminal receive antenna associated with the second antenna port group.

It should be understood that the first data stream subset and the second data stream subset belong to a first data stream set. If the quantity R of data streams included in the first data stream set is 6, which are a data stream 1, a data stream 2, a data stream 3, a data stream 4, a data stream 5, and a data stream 6, the first data stream subset includes the data stream 1, the data stream 2, the data stream 3, and the data stream 4, and the second data stream subset includes the data stream 3, the data stream 4, the data stream 5, and the data stream 6, the same data stream included in the first data stream subset and the second data stream subset is the data stream 3 and the data stream 4. In this case, the first-type data stream is the data stream 3 and the data stream 4, and correspondingly, the second-type data stream is the data stream 1, the data stream 2, the data stream 5, and the data stream 6.

Optionally, indexes of first-type data streams in any frequency domain unit are the same, and indexes of first-type data streams in different frequency domain units are different. Alternatively, DMRS ports corresponding to first-type data streams in any frequency domain unit are the same, and DMRS ports corresponding to first-type data streams in different frequency domain units are different.

In other words, indexes of first-type data streams in a same frequency domain subband are the same, or DMRS ports corresponding to the first-type data streams are the same; and indexes of first-type data streams in different frequency domain subbands are different, or DMRS ports corresponding to the first-type data streams are different.

Optionally, indexes of first-type data streams or indexes of DMRS ports corresponding to first-type data streams in different frequency domain units are determined in a cyclic shift manner. For example, if there are three frequency domain units (a subband 1, a subband 2, and a subband 3), indexes of first-type data streams corresponding to the subband 1 may be data streams 0 and 1, indexes of first-type data streams corresponding to the subband 2 may be data streams 2 and 3, and indexes of first-type data streams corresponding to the subband 3 may be data streams 4 and 5. Alternatively, indexes of DMRS ports corresponding to first-type data streams corresponding to the subband 1 may be 0 and 1, indexes of DMRS ports corresponding to first-type data streams corresponding to the subband 2 may be 2 and 3, and indexes of DMRS ports corresponding to first-type data streams corresponding to the subband 3 may be 4 and 5.

Optionally, an index set of the first-type data streams or an index set of DMRS ports corresponding to the first-type data streams corresponding to the X frequency domain units is:

$$\{(A_1^1, A_2^1, ..., \ A_K^1), (A_1^2, A_2^2, ..., \ A_K^2), ..., (A_1^X, A_2^X, ..., A_K^X)\};$$

Indexes of first-type data streams or indexes of DMRS ports corresponding to first-type data streams corresponding to two adjacent frequency domain units satisfy:

$$A_1^n = (A_1^{n-1} + \Delta) mod \ R; \tag{8}$$

$K$ represents a quantity of first-type data streams in each frequency domain unit. $A_i^j$ represents an index of an $i$th data stream or an index of a DMRS port corresponding to an $i$th data stream in the first-type data streams corresponding to a $j$th frequency domain unit. $R$ represents the quantity of first data streams. $\Delta$ represents a cyclic shift offset. $n$ is an integer greater than or equal to 1 and less than or equal to X. $\Delta$ is a constant. j is an integer greater than or equal to 1 and less than or equal to X. $i$ is an integer greater than or equal to 1 and less than or equal to $K$. $A_i^j$ is an integer greater than or equal to 0 and less than $R$, or $A_i^j$ is an integer greater than or equal to 0 and less than a maximum port index in an allocated DMRS port combination. $K$ is an integer greater than or equal to 2.

It should be noted that the two adjacent frequency domain units may be two frequency domain units with consecutive indexes (for example, frequency domain units corresponding to a frequency domain unit index a and a frequency domain unit index a+1), or two frequency domain units with a minimum frequency domain spacing in the frequency domain units to which the data channel is mapped.

Optionally, the X frequency domain units are included in Y frequency domain unit groups, and an index set of first-type data streams or an index set of DMRS ports corresponding to first-type data streams corresponding to N frequency domain units included in each frequency domain unit group is:

$$\{(A_1^1, A_2^1, ..., \ A_K^1), (A_1^2, A_2^2, ..., \ A_K^2), ..., (A_1^N, A_2^N, ..., A_K^N)\};$$

Indexes of first-type data streams or indexes of DMRS ports corresponding to first-type data streams corresponding to two adjacent frequency domain units satisfy:

$$A_1^n = (A_1^{n-1} + \Delta) mod \ R; \tag{9}$$

K represents a quantity of first-type data streams in each frequency domain unit. $A_i^j$ represents an index of an $i$th data stream or an index of a DMRS port corresponding to an $i$th data stream in the first-type data streams corresponding to a $j$th frequency domain unit. $R$ represents the quantity of first data streams. $\Delta$ represents a cyclic shift offset. $n$ is an integer greater than or equal to 1 and less than or equal to $N$. $\Delta$ is a constant. $j$ is an integer greater than or equal to 1 and less than or equal to $N$. $i$ is an integer greater than or equal to 1 and less than or equal to $K$. $N$ is an integer greater than 1 and less than or equal to $X$. $Y$ is an integer greater than or equal to 1. $A_i^j$ is an integer greater than or equal to 0 and less than $R$, or $A_i^j$ is an integer greater than or equal to 0 and less than a maximum port index in an allocated DMRS port combination. K is an integer greater than or equal to 2.

It should be understood that first-type data streams corresponding to $k^{th}$ frequency domain units in different frequency domain unit groups are the same, where k is greater than or equal to 1 and less than or equal to N. For example, there are two frequency domain unit groups, each frequency domain unit group includes three frequency domain units, and each frequency domain unit includes two mergeable data streams (that is, first-type data streams). In this case, a first-type data stream corresponding to a $k^{th}$ frequency domain unit in a $1^{st}$ frequency domain unit group is the same as a first-type data stream corresponding to a $k^{th}$ frequency domain unit in a $2^{nd}$ frequency domain unit group.

It should be noted that the two adjacent frequency domain units may be two frequency domain units with consecutive indexes (for example, frequency domain units corresponding to a frequency domain unit index a and a frequency domain unit index a+1), or two frequency domain units with a minimum frequency domain spacing in the frequency domain units to which the data channel is mapped.

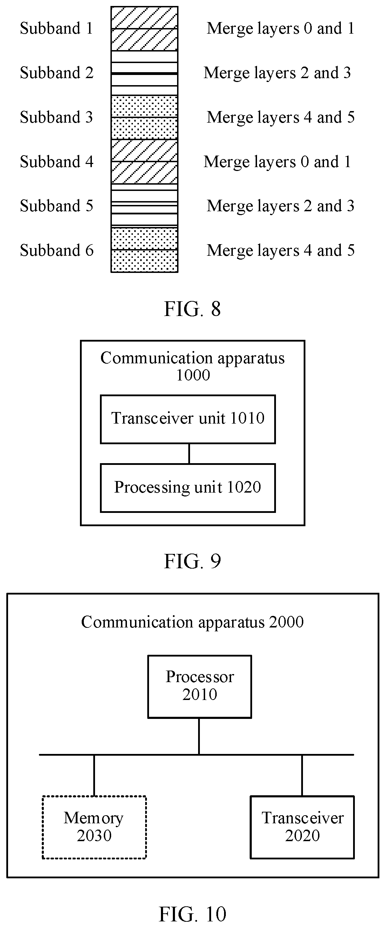

FIG. 8 is a diagram of indexes of first-type data streams in different frequency domain subbands according to an embodiment of this application. For example, the quantity L of transmitted data streams is 6. A sub-receiver 1 corresponds to data streams 0 to 2, and a sub-receiver 2 corresponds to data streams 3 to 5. As shown in FIG. 8, X(6, Y(2, N (3, and K(2, that is, six frequency domain units are included, for example, six subbands, which are a subband 1, a subband 2, a subband 3, a subband 4, a subband 5, and a subband 6. The six subbands are included in two frequency domain unit groups, that is, each frequency domain unit group includes three subbands, for example, a frequency domain unit group 1 {subband 1, subband 2, subband 3} and a frequency domain unit group 2 {subband 4, subband 5, subband 6}. If each grid in the figure corresponds to one RB, a frequency domain length of a subband PRG includes two RBs, In one subband, precoding processing is performed by using a same precoding matrix. Indexes of first-type data streams corresponding to the subband 1 to the subband 3 are {0, 1,}, {2, 3}, and {4, 5}. Indexes of first-type data streams corresponding to the subbands 4 to 6 are {0, 1,}, {2, 3}, and {4, 5}. In other words, a quantity of first-type data streams corresponding to each subband is 2. In addition, as shown in FIG. 8, a cyclic shift offset $\Delta$ between indexes of first-type data streams or indexes of DMRS ports corresponding to first-type data streams corresponding to any two adjacent subbands is 2. In the frequency domain unit group 1 and the frequency domain unit group 2, the indexes of the first-type data streams corresponding to the subband 1 and the subband 4 are {0, 1}, the indexes of the first-type data streams corresponding to the subband 2 and the subband 5 are {2, 3}, and the indexes of the first-type data streams corresponding to the subband 3 and the subband 6 are {4, 5}. In other words, first-type data streams corresponding to same frequency domain units in different frequency domain unit groups are also the same.

S730: The first communication apparatus determines, based on the first data stream, an estimation result of the first signal corresponding to the first data stream.

For example, the first communication apparatus may perform linear MIMO detection or non-linear MIMO detection on the first-type data stream. An example in which a total quantity R of transmitted data streams is 6 is used. The first antenna port group corresponding to the first communication apparatus correspondingly detects data streams 1, 2, 3, and 4, the second antenna port group corresponding to the first communication apparatus correspondingly detects data streams 3, 4, 5, and 6, and each antenna port group detects signals of a maximum of four data streams. It can be learned that the data streams detected by the two antenna port groups include partially overlapping data streams, that is, the first-type data stream is the data streams 3 and 4. Therefore, after a detected signal corresponding to each data stream is demodulated, the overlapping data streams included in the two antenna port groups are merged. Subsequently, codeword-to-layer demapping is performed on detected signals corresponding to the two merged data streams. Because R>4, detected signals corresponding to the six data streams are demapped into two codewords, and then channel decoding is separately performed on the two codewords to obtain the estimation result of the first signal.

According to the foregoing solution, the first-type data streams is polled in different frequency domain subbands, to avoid that merging can be performed on some data streams in different frequency domain subbands, so that each data stream can use, at an equal probability as much as possible, a detection performance advantage brought by data stream merging, ensuring performance balance of each data stream and avoiding deterioration of overall system performance caused by differentiated data stream performance.

FIG. 9 is a schematic block diagram of a communication apparatus 1000 according to an embodiment of this application. As shown in FIG. 9, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit. The processing unit 1020 may be configured to perform processing.

Optionally, the apparatus 1000 may further include a storage unit. The storage unit may be configured to store instructions and/or data. The processing unit 1020 may read the instructions and/or the data in the storage unit, so that the apparatus implements the foregoing method embodiments.

For example, the communication apparatus 1000 is a first communication apparatus, and may be a terminal device, or may be a communication apparatus, for example, a chip, a chip system, or a circuit, that is used in a terminal device or that is matched with a terminal device for use and that can implement a method performed by the terminal device. For details, refer to related descriptions of the chip system shown in the following figure.

For example, the communication apparatus 1000 is a second communication apparatus, and may be a network device, or may be a communication apparatus, for example, a chip, a chip system, or a circuit, that is used in a network device or that is matched with a network device for use and that can implement a method performed by the network device. For details, refer to related descriptions of the chip system shown in the following figure.

In a possible design, the apparatus 1000 may implement the steps or procedures performed by the first communication apparatus in the foregoing method embodiments. The processing unit 1020 is configured to perform the processing-related operations of the first communication apparatus in the foregoing method embodiments. The transceiver unit 1010 is configured to perform the receiving/sending-related operations of the first communication apparatus in the foregoing method embodiments.

For example, the transceiver unit 1010 is configured to receive first indication information from a second communication apparatus, where the first indication information indicates a quantity R of data streams and an index of a first-type data stream, the first-type data stream is a same data stream included in a first data stream subset and a second data stream subset, and R is an integer greater than or equal to 2. The processing unit 1020 is configured to determine the first-type data stream based on the first indication information. The processing unit 1020 is further configured to process the first-type data stream.

For example, the transceiver unit 1010 is configured to receive a first data stream on a first resource, where a frequency domain resource of the first resource includes X frequency domain units, each frequency domain unit is used to transmit at least two first-type data streams, the first-type data stream is a same data stream included in a first data stream subset and a second data stream subset, and X is an integer greater than or equal to 1. The processing unit 1020 is configured to determine, based on the first data stream, an estimation result of a first signal corresponding to the first data stream.

The first communication apparatus corresponds to a first antenna port group and a second antenna port group. The first antenna port group includes a first antenna port, and the first antenna port is configured to detect the first data stream subset in a first data stream set including R data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream.

In another possible design, the apparatus 1000 may implement the steps or procedures performed by the second communication apparatus in the foregoing method embodiments. The transceiver unit 1010 is configured to perform the receiving/sending-related operations of the second communication apparatus in the foregoing method embodiments. The processing unit 1020 is configured to perform the processing-related operations of the second communication apparatus in the foregoing method embodiments.

For example, the processing unit 1020 is configured to determine first indication information, where the first indication information indicates a quantity R of data streams and an index of a first-type data stream, the first-type data stream is a same data stream included in a first data stream subset and a second data stream subset, and R is an integer greater than or equal to 2. The transceiver unit 1010 is configured to send the first indication information to a first communication apparatus.

For example, the processing unit 1020 is configured to determine a to-be-sent first signal. The transceiver unit 1010 is configured to send a first data stream to a first communication apparatus on a first resource. The first data stream is determined based on the first signal. A frequency domain resource of the first resource includes X frequency domain units. Each frequency domain unit includes one or more resource blocks RBs, each frequency domain unit includes at least two first-type data streams. The first-type data stream is a same data stream included in a first data stream set and a second data stream set. X is an integer greater than 1.

The first communication apparatus corresponds to a first antenna port group and a second antenna port group. The first antenna port group includes a first antenna port, and the first antenna port is configured to detect the first data stream subset in a first data stream set including R data streams. The second antenna port group includes a second antenna port, and the second antenna port is configured to detect the second data stream subset in the first data stream set. The first antenna port and the second antenna port include a same part of antenna ports. The first data stream subset and the second data stream subset include the same data stream.

It should be understood that the device 1000 herein is implemented in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the device 1000 may be specifically the transmit end in the foregoing embodiments, and may be configured to perform the procedures and/or steps corresponding to the transmit end in the foregoing method embodiments; or the device 1000 may be specifically the receive end in the foregoing embodiments, and may be configured to perform the procedures and/or steps corresponding to the receive end in the foregoing method embodiments. To avoid repetition, details are not described herein again.

The device 1000 in the foregoing solutions has a function of implementing the corresponding steps performed by the transmit end in the foregoing methods. Alternatively, the device 1000 in the foregoing solutions has a function of implementing the corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may alternatively be a transceiver (for example, a sending unit in the transceiver unit may alternatively be a transmitter, and a receiving unit in the transceiver unit may alternatively be a receiver machine), and another unit, for example, the processing unit, may alternatively be a processor, to separately perform receiving-sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the communication apparatus may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 is a schematic block diagram of a communication apparatus 2000 according to an embodiment of this application. As shown in FIG. 10, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through the internal connection path. The memory 2030 is configured to store the instructions. The processor 2010 may execute the instructions stored in the memory 2030.

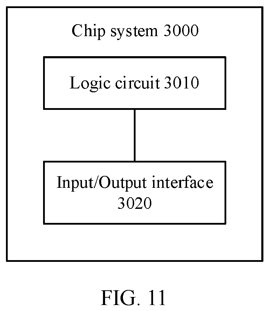

For example, the communication apparatus 2000 is a first communication apparatus, and may be a terminal device, or may be a communication apparatus, for example, a chip, a chip system, or a circuit, that is used in a terminal device or that is matched with a terminal device for use and that can implement a method performed by the terminal device. For details, refer to related descriptions of the chip system shown in FIG. 11.

For example, the communication apparatus 2000 is a second communication apparatus, and may be a network device, or may be a communication apparatus, for example, a chip, a chip system, or a circuit, that is used in a network device or that is matched with a network device for use and that can implement a method performed by the position management function network element. For details, refer to related descriptions of the chip system shown in FIG. 11.

In a possible implementation, the apparatus 2000 is configured to implement the procedures and steps corresponding to the first communication apparatus in the foregoing method embodiments.

In another possible implementation, the apparatus 2000 is configured to implement the procedures and steps corresponding to the second communication apparatus in the foregoing method embodiments.

Optionally, the memory 2030 may include a read-only memory and a random access memory, and provide the instructions and data to the processor. A part of the memory may further include a nonvolatile random access memory. For example, the memory may further store information about a device type. The processor 2010 may be configured to execute the instructions stored in the memory. When the processor 2010 executes the instructions stored in the memory, the processor 2010 is configured to perform the steps and/or procedures in the foregoing method embodiments corresponding to the transmit end or the receive end.

In an implementation process, the steps in the foregoing methods can be implemented by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that the processor in embodiments of this application may be an integrated circuit chip, and has a signal processing capability. In an implementation process, the steps in the foregoing method embodiments can be implemented by using a hardware integrated logical circuit in the processor, or by using instructions in a form of software.

The processor may be a general-purpose processor, a digital signal processor, an application-specific integrated circuit, a field programmable gate array or another programmable logic device, a discrete gate or a transistor logic device, a discrete hardware component, the foregoing CPU, another general-purpose processor, a DSP, an ASIC, an FGPA or another programmable logic device, or a part of a circuit configured to process a function in another chip. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not restrictive description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

In embodiments of this application, the foregoing method may be performed by the first communication apparatus and the second communication apparatus, or may be performed by a chip, a chip system, or a circuit of the first communication apparatus and the second communication apparatus. The chip, the chip system, or the circuit may be installed on the first communication apparatus and the second communication apparatus. The following describes the chip system in the first communication apparatus and the second communication apparatus with reference to FIG. 11.

FIG. 11 is a schematic block diagram of a chip system 3000 according to an embodiment of this application. As shown in FIG. 11, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled and connected to a storage unit, and invoke instructions in the storage unit, so that the chip system 3000 implements the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement operations performed by the first communication apparatus or the second communication apparatus in the foregoing method embodiments.

For example, the logic circuit 3010 is configured to implement processing-related operations performed by the first communication apparatus in the foregoing method embodiments, for example, processing-related operations performed by the first communication apparatus in the foregoing embodiments. The input/output interface 3020 is configured to implement sending and/or receiving-related operations performed by the first communication apparatus in the foregoing method embodiments, for example, sending and/or receiving-related operations performed by the first communication apparatus in the foregoing embodiments.

For another example, the logic circuit 3010 is configured to implement processing-related operations performed by the second communication apparatus in the foregoing method embodiments, for example, processing-related operations performed by the second communication apparatus in the foregoing embodiments. The input/output interface 3020 is configured to implement sending and/or receiving-related operations performed by the second communication apparatus in the foregoing method embodiments, for example, sending and/or receiving-related operations performed by the second communication apparatus in the foregoing embodiments.

An embodiment of this application further provides a computer-readable storage medium. The computer-readable storage medium stores computer instructions used to implement the method performed by the first communication apparatus or the second communication apparatus in the foregoing method embodiments.

An embodiment of this application further provides a computer program product, including instructions. When the instructions are executed by a computer, the method performed by the first communication apparatus or the second communication apparatus in the foregoing method embodiments is implemented.

An embodiment of this application further provides a communication system. The communication system includes the first communication apparatus and the second communication apparatus in the foregoing embodiments.

For explanations and beneficial effects of related content in any one of the apparatuses provided above, refer to the corresponding method embodiments provided above. Details are not described herein again.

A person of ordinary skill in the art may be aware that the units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or an apparatus) to perform all or some of the steps of the methods described in embodiments of this application. The foregoing storage medium includes: any medium that can store program code, such as a USB flash disk, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first communication apparatus, wherein the method comprises:

   receiving first indication information from a second communication apparatus, wherein the first indication information indicates a quantity R of data streams and an index of a first-type data stream, the first-type data stream is a same data stream comprised in a first data stream subset and a second data stream subset, and R is an integer greater than or equal to 2;
   determining the first-type data stream based on the first indication information; and
   processing the first-type data stream, wherein
   the first communication apparatus corresponds to a first antenna port group and a second antenna port group, the first antenna port group comprises a first antenna port, the first antenna port is configured to detect the first data stream subset in a first data stream set comprising the R data streams, the second antenna port group comprises a second antenna port, the second antenna port is configured to detect the second data stream subset in the first data stream set, the first antenna port and the second antenna port comprise a same part of antenna ports, and the first data stream subset and the second data stream subset comprise the same data stream.

**2.** The method according to claim 1, wherein different values of the quantity of data streams correspond to different data stream index combination sets, the data stream index combination set comprises one data stream index combination or a plurality of data stream index combinations, each of the plurality of data stream index combinations comprises at least two candidate first-type data stream indexes, and the index of the first-type data stream belongs to the candidate first-type data stream indexes.

**3.** The method according to claim 1 or 2, wherein the method further comprises:

receiving second indication information from the second communication apparatus, wherein the second indication information indicates a demodulation reference signal DMRS port index combination, the DMRS port index combination comprises a plurality of DMRS port indexes, and the plurality of DMRS port indexes are in one-to-one correspondence with the R data streams; and
detecting the R data streams based on the DMRS port index combination.

**4.** The method according to claim 3, wherein the first data stream subset corresponds to a first DMRS port, the second data stream subset corresponds to a second DMRS port, and frequency domain orthogonal cover codes FD-OCCs corresponding to any two first DMRS ports or any two second DMRS ports satisfy that FD-OCC subsequences ($w_f(0)$, $w_f(1)$) or ($w_f(2),w_f(3)$) whose lengths are 2 are orthogonal, or any two first DMRS ports or any two second DMRS ports belong to different code division multiplexing CDM groups.

**5.** The method according to claim 4, wherein a first port group comprises one or more third DMRS ports, the third DMRS port is associated with a second-type data stream corresponding to the first antenna port group, a second port group comprises one or more fourth DMRS ports, the fourth DMRS port is associated with a second-type data stream corresponding to the second antenna port group, the second-type data stream is a data stream in the first data stream subset or the second data stream subset other than the first-type data stream, the third DMRS port belongs to the first DMRS port, and the fourth DMRS port belongs to the second DMRS port, wherein
FD-OCCs corresponding to any third DMRS port and any fourth DMRS port satisfy that FD-OCC sequences ($w_f(0)$, $w_f(1)$, $w_f(2)$, $w_f(3)$) whose lengths are 4 are orthogonal, and the FD-OCCs satisfy that a correlation coefficient between FD-OCC subsequences ($w_f(0)$, $w_f(1)$) or ($w_f(2)$, $w_f(3)$) whose lengths are 2 is 1.

**6.** The method according to claim 5, wherein the method further comprises:

determining the first-type data stream based on the DMRS port index combination, wherein
FD-OCCs corresponding to a DMRS port corresponding to the first-type data stream and a DMRS port corresponding to the second-type data stream satisfy that FD-OCC subsequences ($w_f(0),w_f(1)$) or ($w_f(2)$, $w_f(3)$) whose lengths are 2 are orthogonal.

**7.** The method according to claim 3, wherein a DMRS signal corresponding to the DMRS port index is mapped to two OFDM symbols, the first data stream subset corresponds to a first DMRS port, the second data stream subset corresponds to a second DMRS port, and time domain orthogonal cover code TD-OCC sequences corresponding to any two first DMRS ports or any two second DMRS ports are orthogonal, or FD-OCC subsequences ($w_f(0)$, $w_f(1)$) or ($w_f(2)$, $w_f(3)$) that correspond to DMRS ports whose TD-OCC sequences are not orthogonal and that have a length of 2 are orthogonal.

**8.** The method according to claim 7, wherein a third port group comprises one or more third DMRS ports, the third DMRS port is associated with a second-type data stream corresponding to the first antenna port group, a fourth port group comprises one or more fourth DMRS ports, the fourth DMRS port is associated with a second-type data stream corresponding to the second antenna port group, the second-type data stream is a data stream in the first data stream subset or the second data stream subset other than the first-type data stream, the third DMRS port belongs to the first DMRS port, and the fourth DMRS port belongs to the second DMRS port, wherein
a correlation coefficient between TD-OCCs corresponding to any third DMRS port and any second DMRS port is 1, and FD-OCCs satisfy that FD-OCC sequences ($w_f(0)$, $w_f(1)$, $w_f(2)$, $w_f(3)$) whose lengths are 4 are orthogonal.

**9.** The method according to claim 8, wherein the method further comprises:

determining the first-type data stream based on the DMRS port index combination, wherein
FD-OCCs corresponding to a DMRS port corresponding to the first-type data stream and a DMRS port corresponding to the second-type data stream satisfy that FD-OCC subsequences ($w_f(0)$, $w_f(1)$) or ($w_f(2)$, $w_f$

(3)) whose lengths are 2 are orthogonal, or TD-OCC sequences corresponding to a DMRS port corresponding to the first-type data stream and a DMRS port corresponding to the second-type data stream are orthogonal.

10. The method according to any one of claims 1 to 9, wherein the method further comprises:

receiving third indication information from the second communication apparatus, wherein the third indication information indicates a codeword-to-layer mapping rule, and the codeword-to-layer mapping rule represents a correspondence between a first codeword, a second codeword, and the R data streams under the quantity R of data streams; and

determining, based on the codeword-to-layer mapping rule and an association relationship between different quantities of data streams and a quantity of first-type data streams, that a data stream corresponding to the first codeword is the first-type data stream, wherein a quantity of data streams corresponding to the first codeword is equal to the quantity of first-type data streams.

11. The method according to claim 10, wherein the first-type data stream in the R data streams is associated with the first codeword, the second-type data stream in the R data streams is associated with the second codeword, and the second-type data stream is a data stream in the first data stream subset or the second data stream subset other than the first-type data stream.

12. The method according to claim 10 or 11, wherein the association relationship between the quantity of data streams and the quantity of first-type data streams is predefined, or the association relationship between the quantity of data streams and the quantity of first-type data streams is configured by using signaling.

13. The method according to any one of claims 1 to 12, wherein

when the quantity R of data streams is 5, the quantity of first-type data streams is 3; or
when the quantity R of data streams is 6, the quantity of first-type data streams is 2.

14. A communication method, applied to a second communication apparatus, wherein the method comprises:

determining first indication information, wherein the first indication information indicates a quantity R of data streams and an index of a first-type data stream, the first-type data stream is a same data stream comprised in a first data stream subset and a second data stream subset, and R is an integer greater than or equal to 2; and
sending the first indication information to a first communication apparatus, wherein
the first communication apparatus corresponds to a first antenna port group and a second antenna port group, the first antenna port group comprises a first antenna port, the first antenna port is configured to detect the first data stream subset in a first data stream set comprising the R data streams, the second antenna port group comprises a second antenna port, the second antenna port is configured to detect the second data stream subset in the first data stream set, the first antenna port and the second antenna port comprise a same part of antenna ports, and the first data stream subset and the second data stream subset comprise the same data stream.

15. The method according to claim 14, wherein different values of the quantity of data streams correspond to different data stream index combination sets, the data stream index combination set comprises one data stream index combination or a plurality of data stream index combinations, each of the plurality of data stream index combinations comprises at least two candidate first-type data stream indexes, and the index of the first-type data stream belongs to the candidate first-type data stream indexes.

16. The method according to claim 14 or 15, wherein the method further comprises:
sending second indication information to the first communication apparatus, wherein the second indication information indicates a demodulation reference signal DMRS port index combination, the DMRS port index combination comprises a plurality of DMRS port indexes, the plurality of DMRS port indexes are in one-to-one correspondence with the R data streams, and the DMRS port index combination is used to detect the R data streams.

17. The method according to claim 16, wherein the first data stream subset corresponds to a first DMRS port, the second data stream subset corresponds to a second DMRS port, and frequency domain orthogonal cover codes FD-OCCs corresponding to any two first DMRS ports or any two second DMRS ports satisfy that FD-OCC subsequences ($w_f(0)$, $w_f(1)$) or ($w_f(2)$, $w_f(3)$) whose lengths are 2 are orthogonal, or any two first DMRS ports or any two second DMRS ports belong to different code division multiplexing CDM groups.

18. The method according to claim 17, wherein a first port group comprises one or more third DMRS ports, the third DMRS port is associated with a second-type data stream corresponding to the first antenna port group, a second port group comprises one or more fourth DMRS ports, the fourth DMRS port is associated with a second-type data stream corresponding to the second antenna port group, the second-type data stream is a data stream in the first data stream subset or the second data stream subset other than the first-type data stream, the third DMRS port belongs to the first DMRS port, and the fourth DMRS port belongs to the second DMRS port, wherein
FD-OCCs corresponding to any third DMRS port and any fourth DMRS port satisfy that FD-OCC sequences ($w_f(0)$, $w_f(1)$, $w_f(2)$, $w_f(3)$) whose lengths are 4 are orthogonal, and the FD-OCCs satisfy that a correlation coefficient between FD-OCC subsequences ($w_f(0)$, $w_f(1)$) or ($w_f(2)$, $w_f(3)$) whose lengths are 2 is 1.

19. The method according to claim 16, wherein a DMRS signal corresponding to the DMRS port index is mapped to two OFDM symbols, the first data stream subset corresponds to a first DMRS port, the second data stream subset corresponds to a second DMRS port, and time domain orthogonal cover code TD-OCC sequences corresponding to any two first DMRS ports or any two second DMRS ports are orthogonal, or FD-OCC subsequences ($w_f(0)$, $w_f(1)$) or ($w_f(2)$, $w_f(3)$) that correspond to DMRS ports whose TD-OCC sequences are not orthogonal and that have a length of 2 are orthogonal.

20. The method according to claim 19, wherein a third port group comprises one or more third DMRS ports, the third DMRS port is associated with a second-type data stream corresponding to the first antenna port group, a fourth port group comprises one or more fourth DMRS ports, the fourth DMRS port is associated with a second-type data stream corresponding to the second antenna port group, the second-type data stream is a data stream in the first data stream subset or the second data stream subset other than the first-type data stream, the third DMRS port belongs to the first DMRS port, and the fourth DMRS port belongs to the second DMRS port, wherein
a correlation coefficient between TD-OCCs corresponding to any third DMRS port and any second DMRS port is 1, and FD-OCCs satisfy that FD-OCC sequences ($w_f(0)$, $w_f(1)$, $w_f(2)$, $w_f(3)$) whose lengths are 4 are orthogonal.

21. The method according to any one of claims 14 to 20, wherein the method further comprises:

sending third indication information to the first communication apparatus, wherein the third indication information indicates a codeword-to-layer mapping rule, and the codeword-to-layer mapping rule represents a correspondence between a first codeword, a second codeword, and the R data streams under the quantity R of data streams, wherein
the codeword-to-layer mapping rule is used to determine that a data stream corresponding to the first codeword is the first-type data stream, and a quantity of data streams corresponding to the first codeword is equal to a quantity of first-type data streams.

22. The method according to claim 21, wherein the first-type data stream in the R data streams is associated with the first codeword, the second-type data stream in the R data streams is associated with the second codeword, and the second-type data stream is a data stream in the first data stream subset or the second data stream subset other than the first-type data stream.

23. The method according to claim 21 or 22, wherein an association relationship between the quantity of data streams and the quantity of first-type data streams is predefined, or an association relationship between the quantity of data streams and the quantity of first-type data streams is configured by using signaling.

24. The method according to any one of claims 14 to 23, wherein

when the quantity R of data streams is 5, the quantity of first-type data streams is 3; or
when the quantity R of data streams is 6, the quantity of first-type data streams is 2.

25. A communication apparatus, comprising a module or a unit configured to perform the method according to any one of claims 1 to 13.

26. A communication apparatus, comprising a module or a unit configured to perform the method according to any one of claims 14 to 24.

27. A communication apparatus, wherein the communication apparatus comprises a processor, the processor is coupled to a memory, the memory stores instructions, and when the instructions are run by the processor, the communication apparatus is enabled to perform the method according to any one of claims 1 to 13,

28. A communication apparatus, wherein the communication apparatus comprises a processor, the processor is coupled to a memory, the memory stores instructions, and when the instructions are run by the processor, the communication apparatus is enabled to perform the method according to any one of claims 14 to 24.

29. A computer-readable storage medium, wherein the computer-readable storage medium is configured to store a computer program, and when the computer program is run on a computer, the computer is enabled to perform the method according to any one of claims 1 to 13, or the computer is enabled to perform the method according to any one of claims 14 to 24.

30. A communication system, comprising the communication apparatus according to claim 25 or 27.

31. A computer program product, wherein when the computer program product is executed by a communication apparatus, the method according to any one of claims 1 to 13 is implemented, or the method according to any one of claims 14 to 24 is implemented.

FIG. 1

FIG. 2

...

$W_f(1)$, $W_f(0)$, $W_f(3)$, $W_f(2)$, $W_f(1)$, $W_f(0)$

| | |
|---|---|
| 2 3 6 7 10 11 14 15 | 2 3 6 7 10 11 14 15 |
| 0 1 4 5 8 9 12 13 | 0 1 4 5 8 9 12 13 |
| 2 3 6 7 10 11 14 15 | 2 3 6 7 10 11 14 15 |
| 0 1 4 5 8 9 12 13 | 0 1 4 5 8 9 12 13 |
| 2 3 6 7 10 11 14 15 | 2 3 6 7 10 11 14 15 |
| 0 1 4 5 8 9 12 13 | 0 1 4 5 8 9 12 13 |
| 2 3 6 7 10 11 14 15 | 2 3 6 7 10 11 14 15 |
| 0 1 4 5 8 9 12 13 | 0 1 4 5 8 9 12 13 |
| 2 3 6 7 10 11 14 15 | 2 3 6 7 10 11 14 15 |
| 0 1 4 5 8 9 12 13 | 0 1 4 5 8 9 12 13 |
| 2 3 6 7 10 11 14 15 | 2 3 6 7 10 11 14 15 |
| 0 1 4 5 8 9 12 13 | 0 1 4 5 8 9 12 13 |

(a)

$W_f(3)$, $W_f(2)$, $W_f(1)$, $W_f(0)$

| | |
|---|---|
| 4 5 10 11 16 17 22 23 | 4 5 10 11 16 17 22 23 |
| 4 5 10 11 16 17 22 23 | 4 5 10 11 16 17 22 23 |
| 2 3 8 9 14 15 20 21 | 2 3 8 9 14 15 20 21 |
| 2 3 8 9 14 15 20 21 | 2 3 8 9 14 15 20 21 |
| 0 1 6 7 12 13 18 19 | 0 1 6 7 12 13 18 19 |
| 0 1 6 7 12 13 18 19 | 0 1 6 7 12 13 18 19 |
| 4 5 10 11 16 17 22 23 | 4 5 10 11 16 17 22 23 |
| 4 5 10 11 16 17 22 23 | 4 5 10 11 16 17 22 23 |
| 2 3 8 9 14 15 20 21 | 2 3 8 9 14 15 20 21 |
| 2 3 8 9 14 15 20 21 | 2 3 8 9 14 15 20 21 |
| 0 1 6 7 12 13 18 19 | 0 1 6 7 12 13 18 19 |
| 0 1 6 7 12 13 18 19 | 0 1 6 7 12 13 18 19 |

(b)

FIG. 3

400

```
┌─────────────────┐                          ┌─────────────────┐
│     Second      │                          │      First      │
│  communication  │                          │  communication  │
│   apparatus     │                          │    apparatus    │
└─────────────────┘                          └─────────────────┘
        │                                            │
┌───────────────────────────┐                       │
│ S410: Determine first      │                       │
│ indication information     │                       │
└───────────────────────────┘                       │
        │                                            │
        │   S420: First indication information       │
        │───────────────────────────────────────────▶│
        │                                            │
        │          ┌───────────────────────────────┐ │
        │          │ S430: Determine a first-type  │ │
        │          │ data stream based on the first│ │
        │          │ indication information        │ │
        │          └───────────────────────────────┘ │
        │                                            │
        │          ┌───────────────────────────────┐ │
        │          │ S440: Process the first-type  │ │
        │          │ data stream                   │ │
        │          └───────────────────────────────┘ │
        │                                            │
```

FIG. 4

FD-OCC 2

FD-OCC 4                    FD-OCC 2

FIG. 5

TD-OCC 2

| 0 | 1 | 4 | 5 |

| 0 | 1 | 4 | 5 |

| 8 | 9 | 12 | 13 |

| 8 | 9 | 12 | 13 |

FD-OCC 4                    TD-OCC 2

## FIG. 6

700

| Second communication apparatus | | First communication apparatus |

S710: Determine a to-be-sent first signal

S720: Send a first data stream on a first resource

S730: Determine, based on the first data stream, an estimation result of the first signal corresponding to the first data stream

## FIG. 7

Subband 1      Merge layers 0 and 1

Subband 2      Merge layers 2 and 3

Subband 3      Merge layers 4 and 5

Subband 4      Merge layers 0 and 1

Subband 5      Merge layers 2 and 3

Subband 6      Merge layers 4 and 5

FIG. 8

Communication apparatus
1000

Transceiver unit 1010

Processing unit 1020

FIG. 9

Communication apparatus 2000

Processor
2010

Memory
2030

Transceiver
2020

FIG. 10

Chip system 3000

Logic circuit 3010

Input/Output interface 3020

FIG. 11

## INTERNATIONAL SEARCH REPORT

| International application No. |
| --- |
| **PCT/CN2024/105883** |

| A. | CLASSIFICATION OF SUBJECT MATTER |
| --- | --- |
| | H04L 1/00(2006.01)i |

According to International Patent Classification (IPC) or to both national classification and IPC

| B. | FIELDS SEARCHED |
| --- | --- |

Minimum documentation searched (classification system followed by classification symbols)

IPC:H04L,H04W,H04Q

Documentation searched other than minimum documentation to the extent that such documents are included in the fields searched

Electronic data base consulted during the international search (name of data base and, where practicable, search terms used)

3GPP, DWPI, ENTXT, CNKI, CNTXT, ENTXTC: 端口, 个数, 空间层, 空间流, 数据流, 数量, 数目, 索引, 天线, 相同, MIMO, R, rank, indicate, number, index, spatial streams, port

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2019373586 A1 (QUALCOMM INC.) 05 December 2019 (2019-12-05) description, paragraphs 0132-0137 and 0143-0148, and figures 5 and 7 | 1-31 |
| A | WO 2023149751 A1 (HYUNDAI MOTOR COMPANY et al.) 10 August 2023 (2023-08-10) entire document | 1-31 |
| A | US 2023107240 A1 (TELEFONAKTIEBOLAGET LM ERICSSON (PUBL)) 06 April 2023 (2023-04-06) entire document | 1-31 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 September 2024** | **11 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2024/105883**

| Patent document cited in search report | | | Publication date (day/month/year) | Patent family member(s) | | | Publication date (day/month/year) |
|---|---|---|---|---|---|---|---|
| US | 2019373586 | A1 | 05 December 2019 | None | | | |
| WO | 2023149751 | A1 | 10 August 2023 | KR | 20230118516 | A | 11 August 2023 |
| US | 2023107240 | A1 | 06 April 2023 | EP | 4115673 | A1 | 11 January 2023 |
| | | | | WO | 2021176062 | A1 | 10 September 2021 |
| | | | | JP | 2023520310 | A | 17 May 2023 |
| | | | | CN | 115516967 | A | 23 December 2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311136266